# EUROPEAN PATENT APPLICATION

(11) **EP 4 283 730 A2**
(43) Date of publication of application: **29.11.2023**
(21) Application number: 22275169.5
(22) Date of filing: 29.12.2022
(51) Int. Cl.: H01M 10/04, H01M 50/503, H01M 50/516, H01M 50/526, H01M 50/593

(54) **SECONDARY BATTERY AND ASSEMBLY METHOD OF SECONDARY BATTERY**

(30) Priority: 25.05.2022 CN 202210583292; 26.05.2022 CN 202221320750 U; 30.06.2022 CN 202221683929 U; 10.11.2022 CN 202211402811; 10.11.2022 CN 202211403651; 10.11.2022 CN 202222987617 U; 10.11.2022 CN 202222995055 U; 10.11.2022 CN 202223000130 U
(71) Applicant: REPT BATTERO Energy Co., Ltd., Wenzhou, Zhejiang 325024 (CN); Shanghai Ruipu Energy Co., Ltd., Shanghai 201206 (CN)
(72) Inventor: CAO, Hui, Wenzhou (CN); HU, Peng, Wenzhou (CN); WANG, Xingdong, Wenzhou (CN); HOU, Min, Pudong New District (CN); YU, Xianfeng, Wenzhou (CN); LIU, Wei, Pudong New District (CN); JIN, Lingwei, Wenzhou (CN); CAI, Yunlong, Wenzhou (CN); YU, Zhaoyu, Wenzhou (CN); WU, Shiming, Wenzhou (CN)
(74) Representative: Potter Clarkson

(57) **Abstract**

The application relates to a secondary battery and an assembly method thereof. The secondary battery comprises a secondary battery assembly, the secondary battery assembly comprises an electric cell assembly, a transfer conductor and an insulation plate, wherein the electric cell assembly comprises at least two electric cells arranged side by side, and each electric cell has a tab extending from the top surface of the electric cell. The transfer conductor is provided with a transfer conductor tab assembly part. The insulation plate is located between the electric cell assembly and the transfer conductor, and the insulation plate is provided with a plate tab matching part, wherein, the folded tab passes through the plate tab matching part of the base plate and the transfer conductor tab assembly part in turn, and then is welded with the transfer conductor. The secondary battery of the application features short tabs, good battery performance, high safety, high assembly efficiency and low cost.

## Description

### TECHNICAL FIELD

The invention relates to the field of secondary batteries, in particular to a secondary battery and an assembly method of the secondary battery.

### BACKGROUND

At present, the secondary battery usually comprises a top cover, a shell, an electric cell and a transfer sheet. The internal assembly structure of the battery usually comprises two types. The first type of assembly structure is that one or more tabs are arranged below the transfer sheet and are connected with the transfer sheet by welding. The transfer sheet connecting the tabs of the electric cell is then connected with the pole of the top cover by welding. The second type of assembly structure is that one or more tabs are arranged below the pole and are directly connected with the pole of the top cover by welding. After the connection between the tab and the pole is realized, bent the tab, and load the cell into the shell to complete the structural assembly of the secondary battery. For the above two assembly structures, generally, the electric cell and its tab are kept horizontal first. During assembly and connection, the electric cell and its tabs on the top shall always be kept horizontal with the transfer sheet or the top cover. When the electric cell enters the shell, the tabs shall be bent first, and then the electric cell is combined. The step of bending the tab will lead to the following problems. Firstly, the electric cell needs to reserve space for the tab in its height direction, resulting in low space utilization rate in the height direction and difficulty in improving the energy density of the secondary battery. Secondly, the space for bending the tab is small, and the path and relaxation state from the tab to the transfer sheet are different. The tab is redundant and sinking, which causes the safety risk of short circuit of the secondary battery. Thirdly, after the tab is bent, the tab is not supported, and it is easy to insert the tab into the electrode sheet, which will cause the safety risk of short circuit of the secondary battery. Fourthly, the tab is easy to be squeezed and the outer tab is stressed. The tab is easy to be damaged and broken, resulting in the decrease of over-current capacity, which affects the performance and service life of the battery. Fifthly, the tab is long and the internal resistance of the battery is large, which affects the performance of the secondary battery. At the same time, the cost of raw materials is high.

In addition, with the continuous deepening and expansion of the secondary battery in various application fields, the requirements for its safety performance in various fields are also getting increasingly higher. The adhesive tape bonding structure of the secondary battery is an important factor affecting the safety performance of the battery. However, the safety of the adhesive tape currently used for the secondary battery has a large room for improvement and needs to be further improved.

### SUMMARY

The application proposes a secondary battery to solve the above technical problems, which comprises a secondary battery assembly. The secondary battery assembly comprises an electric cell assembly, a transfer conductor and an insulation plate, wherein the electric cell assembly comprises at least two electric cells arranged side by side, and each electric cell has a tab extending from a top surface of the electric cell; the transfer conductor is provided with a transfer conductor tab assembly part; the insulation plate is located between the electric cell assembly and the transfer conductor, and the insulation plate is provided with a plate tab matching part; wherein, folded tabs pass through the plate tab matching part and the transfer conductor tab assembly part in turn, and then are welded with the transfer conductor.

The application proposes a secondary battery assembly to solve the above technical problems which comprises an electric cell assembly. The electric cell assembly comprises at least two electric cells arranged side by side, and the electric cell has a tab extending out; a transfer conductor is provided with a tab assembly hole; an insulation plate which is located between the electric cell assembly and the transfer conductor, and the insulation plate is provided with a tab through hole; wherein the tab of the electric cell, after being folded up, passes through the tab through hole and the tab assembly hole upwards in turn, and then is welded with the transfer conductor; alternatively, the tab of the electric cell at an outer side the battery assembly, after being folded up, passes through the tab through hole and both sides of the transfer conductor in turn and is welded with the transfer conductor, while the tab of the other electric cells, after being folded up, passes through the tab through hole and the tab assembly hole in turn and is welded with the transfer conductor.

In an embodiment of the present application, the projection of the tab assembly hole coincides with that of the tab passing through the tab assembly hole in a height direction.

In an embodiment of the application, the tab passes through the tab through hole and the tab assembly hole in turn and then is welded with a hole wall of the transfer conductor; alternatively, the tab passes through the tab through hole and the tab assembly hole in turn, and then is bent and welded with a top surface of the transfer conductor.

In an embodiment of the application, the electric cell assembly comprises at least three electric cells arranged side by side, and the tab of the outermost electric cell passes through the tab through hole and is welded with the side wall of the transfer conductor; alternatively, after the tab of the outermost electric cell passes through the tab through hole, it is wrapped over the side of the transfer conductor to the upper of the transfer conductor and welded with the top surface of the transfer conductor.

In an embodiment of the present application, the number of the electric cell is n, n is a positive integer ≥3, and the number of tab assembly holes opened on the transfer conductor is n-2.

In an embodiment of the present application, the electric cell assembly comprises at least three electric cells arranged side by side, the height of the tab of the outermost electric cell is greater than the height of the tab of the inner electric cell, and the tab of each electric cell is bent toward the innermost electric cell and welded with the tab of the innermost electric cell.

In an embodiment of the present application, the tab comprises a positive tab and a negative tab spaced on the electric cell; the transfer conductor comprises a positive transfer sheet and a negative transfer sheet, and the tab assembly hole comprises a positive assembly hole on the positive adapter and a negative assembly hole on the negative transfer sheet.

In an embodiment of the present application, a chamfer or a fillet is arranged around a hole opening of the tab assembly hole, a positioning slot matching the contour of the transfer conductor is arranged at the top of the insulation plate, and the transfer conductor is located in the positioning slot.

In order to solve the above technical problems, the application also proposes a secondary battery, comprising a shell. The shell is a hollow structure enclosed around the top opening. The shell is provided with the secondary battery assembly described in any of the above embodiments, the top of the shell is provided with a top cover that seals the secondary battery assembly in the shell, and the top cover is provided with a pole connected with the transfer conductor.

In order to solve the above technical problems, the application also proposes an assembly method of the secondary battery. The method uses the above secondary battery, and the method comprises the following steps: laminating a multilayer of electrode sheets which are protruding from the electric cell, and ultrasonically pre-welding the electrode sheets into the tab; bundling a plurality of the electric cells side by side, and combining the plurality of electric cells into the electric cell assembly; setting the insulation plate on the top of the electric cell assembly, and making the tab of each electric cell pass through the tab through hole on the insulation plate; setting the transfer conductor on the top of the insulation plate, while the tab of each electric cell further passes through the tab assembly hole on the transfer conductor; bending the tab passing through the tab assembly hole, and attaching and welding the bent tab with a top surface of the transfer conductor to form the secondary battery assembly; setting a top cover on the top of the secondary battery assembly to connect the transfer conductor, while a pole of the top cover is electrically connected with the transfer conductor; installing the secondary battery assembly into a shell with top opening, and sealing the secondary battery assembly in the shell with the top cover.

In order to solve the problem that the transfer sheet and insulation plate need to be pressed by external force during the secondary battery assembly and welding process, which reduces the production efficiency and increases the production cost, the application also proposes a secondary battery shell which is self matched with the plate, comprising a battery shell, which is a cylinder structure with a top opening closed around, and the inner wall of the battery shell is provided with a limited structure which limits the plate in the battery shell.

In an embodiment of the present application, the limited structure is a plurality of convex plates fixed on the inner wall of the battery shell, and the convex plates are located on two side walls parallel to each other of the battery shell.

In an embodiment of the present application, the convex plate is a spherical crown projecting toward the inside of the battery shell, and a plurality of the convex plates are at the same height on the inner wall of the battery shell.

In an embodiment of the present application, the convex plate is a triangular limit block projecting toward the inside of the battery shell, the top of the triangular limit block is provided with a downward inclined guide surface, and a bottom of the triangular limit block is provided with a limit surface contacting the insulation plate.

In an embodiment of the present application, the convex plate comprises: an upper limit block and a lower limit block. The upper limit block is located on a top of the lower limit block and they are set at intervals with each other, and a positioning space for clamping the insulation plate is formed between the upper limit block and the lower limit block.

In an embodiment of the present application, the convex plate and the battery shell are of an integral forming structure made of aluminum alloy, and the convex plate is close to a top opening of the battery shell.

In an embodiment of the application, the limited structure is a groove arranged on the inner wall of the battery shell, and the groove is clamped with the edge of the insulation plate to clamp the insulation plate in the battery shell.

In an embodiment of the present application, the grooves are located on two parallel side walls of the battery shell, and the grooves extend along a length direction of the insulation plate.

In an embodiment of the present application, the grooves are provided with a plurality of grooves spaced along the length direction of the insulation plate, and the edge of the insulation plate is provided with a plurality of bumps adapted to the grooves.

In order to solve the problem that it is necessary to press the transfer sheet and insulation plate with external force during the assembly and welding of the secondary battery, which reduces the production efficiency and increases the production cost, the application also proposes a secondary battery, which comprises the secondary battery shell described in any of the above embodiments; and a plate located in the secondary battery shell, which is clamped with the limited structure in the secondary battery shell.

In order to solve the technical problem that the safety performance of adhesive tape of the secondary battery needs to be improved during the use of the secondary battery, the application also proposes a secondary battery, which comprises: a winding cell with a plurality of tabs on the top; two transfer sheets arranged on the top of the winding cell, and the said tabs are respectively welded on the surfaces of the two transfer sheets to form a welding area; at least one double-sided protective adhesive layer with both sides of bonding surfaces is attached to the upper part of the transfer sheet and at least covers the welding area.

In an embodiment of the present application, the double-sided protective adhesive layer comprises: two adhesive layers; a carbonate protective layer is arranged between the two layers of the cohesive layer.

In an embodiment of the application, the carbonate protective layer is sodium bicarbonate or sodium carbonate layer structure.

In an embodiment of the application, the adhesive layer is a double-sided adhesive layer, and the carbonate protective layer is a powder layer structure laid and adhered between the two adhesive layers.

In an embodiment of the present application, the double-sided protective adhesive layer is a whole sheet structure, and is attached to cover the welding area on the two transfer sheets simultaneously.

In an embodiment of the application, the double-sided protective adhesive layer is provided with a plurality of sheets, and each sheet of the double-sided protective adhesive layer is respectively attached to cover one or more of the welding areas on the two transfer sheets.

In the first embodiment of the application, the transfer sheet is provided with an transfer convex plate and a liquid injection hole, and the double-sided protective adhesive layer is provided with a first hole position corresponding to the transfer convex plate and a second hole position corresponding to the liquid injection hole.

In an embodiment of the application, the shape and size of the first hole position are consistent with the circumference of the transfer convex plate; the shape and size of the second hole position are consistent with the circumference of the liquid injection hole.

In an embodiment of the application, a plate covering the top surface of the winding cell is arranged between the transfer sheet and the winding cell, and the tab passes through the plate and the transfer sheet and is welded to the surface of the transfer sheet.

In an embodiment of the present application, the double-sided protective adhesive layer completely covers the transfer sheet, and both ends of the double-sided protective adhesive layer extend beyond two sides of the plate and are adhered to the side wall of the winding cell.

The secondary battery and its assembly method in the invention can avoid various problems caused by bending the tab, improve the performance of the secondary battery and reduce the safety risk.

### ASPECTS AND EMBODIMENTS OF THE INVENTION

According to a first aspect of the invention, there is provided a secondary battery, characterized in that the secondary battery comprises a secondary battery assembly, and the secondary battery assembly comprises an electric cell assembly, a transfer conductor and an insulation plate, wherein the electric cell assembly comprises at least two electric cells arranged side by side, and each electric cell has a tab extending from a top surface of the electric cell; the transfer conductor is provided with a transfer conductor tab assembly part; the insulation plate is located between the electric cell assembly and the transfer conductor, and the insulation plate is provided with a plate tab matching part; wherein, folded tabs pass through the plate tab matching part and the transfer conductor tab assembly part in turn, and then are welded with the transfer conductor.

In embodiments of the invention, the transfer conductor tab assembly part may comprise a transfer conductor tab assembly hole, the transfer conductor tab assembly hole may be a through hole located in an interior of the transfer conductor, and part or all of the folded tabs may pass through the plate tab matching part and the transfer conductor tab assembly hole in turn, and then may be welded with the transfer conductor.

In embodiments of the invention, the electric cell may comprise an inner electric cell, the inner electric cell may be located inside the electric cell assembly, a tab of the inner electric cell may be a first tab, and the folded first tabs may pass through the plate tab matching part and the transfer conductor tab assembly hole in turn, and then may be welded with the transfer conductor.

In embodiments of the invention, the transfer conductor tab assembly hole may have a hole wall, and the tabs may pass through the plate tab matching part and the transfer conductor tab assembly hole in turn, and then may be welded with the hole wall of the transfer conductor; alternatively, the tabs may be bent after passing through the plate tab matching part and the transfer conductor tab assembly hole in turn, and the bent tabs may be welded with a top surface of the transfer conductor.

In embodiments of the invention, the number of the electric cells may be n, n may be a positive integer ≥3, and the number of the transfer conductor tab assembly hole may be n-2.

In embodiments of the invention, the tab may comprise a positive tab and a negative tab, the transfer conductor tab assembly hole may comprise a first transfer conductor tab assembly hole and/or a second transfer conductor tab assembly hole, and the positive tab or the negative tab on one of the electric cell assembly may pass through the first transfer conductor tab assembly hole; two positive tabs or two negative tabs on two adjacent electric cells in the electric cell assembly may pass through the second transfer conductor tab assembly hole.

In embodiments of the invention, the transfer conductor may have a transfer conductor central axis, the transfer conductor central axis may extend along a width direction of the secondary battery, the second transfer conductor tab assembly hole may be located on the transfer conductor central axis, and the second transfer conductor tab assembly hole may be symmetrical with a vertical plane of the transfer conductor central axis.

In embodiments of the invention, the secondary battery may comprise two transfer conductors, each transfer conductor may have a first side and a second side extending along a thickness direction of the secondary battery, the transfer conductor tab assembly hole may have an opening on the first side, and the first side of each transfer conductor may face the first side of the other transfer conductor.

In embodiments of the invention, the transfer conductor tab assembly part may comprise a side assembly part, the transfer conductor may have a third side and a fourth side extending along a width direction of the secondary battery, and the side assembly part may be located on the third side and/or the fourth side of the transfer conductor; part or all of the folded tabs may pass through the plate tab matching part and wrap over the side assembly part in turn, and then may be welded with the transfer conductor.

In embodiments of the invention, the electric cell may further comprise an outer electric cell, the outer electric cell may be located on outer side of the electric cell assembly, a tab of the outer electric cell may be a second tab, and folded second tabs may pass through the plate tab matching part and wrap over the side assembly part in turn, and then may be welded with the transfer conductor.

In embodiments of the invention, the side assembly part may be provided with a side wall, and the tabs may pass through the plate tab matching part and the side assembly part in turn and may be welded with the side wall; alternatively, the tabs may be bent after passing through the plate tab matching part and the side assembly part in turn, and the bent tabs may be wrapped from a side of the transfer conductor to an upper of the transfer conductor, and may be welded with a top surface of the transfer conductor.

In embodiments of the invention, the transfer conductor tab assembly part may further comprise a side recessed part, the side recessed part may be located on the third side and/or the fourth side of the transfer conductor, the side recessed part may be recessed into an interior of the transfer conductor, and the side recessed part may be used to allow the corresponding tab to pass through and bend towards the interior of the transfer conductor.

In embodiments of the invention, the secondary battery may comprise two transfer conductors, each transfer conductor may have a first side and a second side extending along a thickness direction of the secondary battery, wherein the first side of each transfer conductor may face the first side of the other transfer conductor; the side assembly part and a plurality of side recessed parts may be sequentially connected to form a stepped structure, the stepped structure may be indented to the interior of the transfer conductor from the second side to the first side, or the stepped structure may be indented to the interior of the transfer conductor from the first side to the second side.

In embodiments of the invention, a top surface of the transfer conductor may be provided with a sinking platform, the sinking platform may have a sinking platform depth relative to the top surface, the transfer conductor tab assembly part may be located in the sinking platform, and the sinking platform may be used to accommodate the bent tab.

In embodiments of the invention, the insulation plate may have a first plate side and a second plate side extending along a width direction of the secondary battery, the first plate side and the second plate side may be arranged oppositely, the plate tab matching part may comprise a plate tab matching hole and/or a plate side recessed part, and the plate tab matching hole may be a through hole penetrating the insulation plate, the plate side recessed part may be located at the first plate side and/or the second plate side, and the plate side recessed part may be recessed into an interior of the insulation plate.

In embodiments of the invention, the plate tab matching hole may comprise a first plate matching hole and/or a second plate matching hole, each of the first plate matching hole may be used to allow one of the tabs passing through, and each of the second plate matching hole may be used to allow a plurality of homopolar tabs on adjacent cells to pass through.

In embodiments of the invention, each of the electric cell may have a first side and a second side opposite to each other along a thickness direction of the electric cell assembly, the first side of each electric cell may be arranged close to an inner side of the electric cell assembly, and the second side of each electric cell may be arranged close to an outer side of the electric cell assembly; in the thickness direction of the electric cell assembly, the tabs may protrude from a position close to the first side on the top surface of the electric cell.

In embodiments of the invention, the transfer conductor may comprise a transfer conductor pole, an upper surface of the transfer conductor may be divided into a first transfer conductor area and a second transfer conductor area by a separation line extending along the thickness direction of the electric cell assembly, and the transfer conductor pole may be located in the first transfer conductor area; the transfer conductor tab assembly parts corresponding to two innermost electric cells of the electric cell assembly may be located in the second transfer conductor area; the transfer conductor tab assembly parts corresponding to two innermost electric cells of the electric cell assembly may have a first projection along a width direction of the electric cell assembly, the transfer conductor pole may have a second projection along the width direction of the electric cell assembly, and the second projection may cover the first projection.

In embodiments of the invention, the electric cell assembly may comprise at least one set of electric cell pairs, each set of the electric cell pairs may comprise two electric cells adjacent to each other, homopolar tabs of the two electric cells adjacent to each other may be combined into a single pole tab, and the single pole tab may pass through the plate tab matching part and the transfer conductor tab assembly part in turn, and then may be welded with the transfer conductor.

In embodiments of the invention, the cell assembly may comprise at least two cell groups, and the cell groups may be adjacent along a thickness direction of the secondary battery; each electric cell group may comprise at least two electric cells, and the electric cells in each electric cell group may be successively adjacent along the thickness direction; the tabs may comprise positive tabs and negative tabs, top surfaces of a plurality of electric cells may form a plane, the plane may be divided into an equal first plane area and a second plane area by a central axis extending along the thickness direction, wherein all the positive tabs may be located in the first plane area, and all the negative tabs may be located in the second plane area, the projections of all positive tabs in the first plane area of each cell group along the thickness direction may not overlap, and the projections of all negative tabs in the second plane area of each cell group along the thickness direction may not overlap.

In embodiments of the invention, the projections of the transfer conductor tab assembly parts along the thickness direction corresponding to all the positive tabs in the first plane area of each cell group may not overlap; projections of the transfer conductor tab assembly parts along the thickness direction corresponding to all the negative tabs in the second plane area of each cell group may not overlap.

In embodiments of the invention, projections of the plate tab matching parts along the thickness direction corresponding to all the positive tabs in the first plane area of each cell group may not overlap; projections of plate tab matching parts along the thickness direction corresponding to all the negative tabs in the second plane area of each cell group may not overlap.

In embodiments of the invention, the secondary battery may have a first central axis extending along its width direction, and a plurality of plate tab matching parts may be symmetrically distributed with a vertical plane of the first central axis as the symmetry plane; the secondary battery may have a second central axis extending along its thickness direction, and a plurality of plate tab matching parts may be symmetrically distributed with the vertical plane of the second central axis as the symmetry plane; a plurality of plate tab matching parts may be evenly divided into two parallel groups by the vertical plane of the second central axis, wherein each parallel group may comprise N plate tab matching parts, and the N plate tab matching parts may be evenly divided into two vertical groups by the vertical plane of the first central axis, and each vertical group may comprise N/2 plate tab matching parts; there may be a first distance between each of the N/2 plate tab matching part and the vertical plane of the first central axis, and there may be a second distance between each of the N/2 plate tab matching part and the vertical plane of the second central axis, the second distance may increase or decrease with the increase of the first distance, wherein the N may be an even number greater than or equal to four.

In embodiments of the invention, in each of the vertical group, at least two plate tab matching parts may be connected with each other to form a zigzag connected pattern.

In embodiments of the invention, the boundary between the plate tab matching part and the upper surface and/or the lower surface of the insulation plate may be a fillet structure, and a range of a fillet radius R of the fillet structure may be 0.1mm ≤ R ≤ Tp/2, wherein Tp is a thickness of the insulation plate.

In embodiments of the invention, the electric cell assembly may comprise at least three electric cells arranged side by side, a height of a second tab of an outer electric cell located at an outer side may be greater than a height of a first tab of an inner electric cell located at an inner side, and the tab of each electric cell may be bent towards the inner electric cell and welded with the first tab of the innermost electric cell.

In embodiments of the invention, a chamfer or fillet may be arranged around an opening of the transfer conductor tab assembly part, a top of the insulation plate may be provided with a positioning slot matching a contour of the transfer conductor, and the transfer conductor may be located in the positioning slot.

In embodiments of the invention, the secondary battery may further comprise a shell and a top cover, the shell may be a hollow structure enclosed around a top opening, the secondary battery assembly may be set in the shell, the top cover may be used to be set on a top of the shell and seal the secondary battery assembly in the shell, the top cover may be provided with a pole connected with the transfer conductor, an inner wall of the shell may be provided with a limited structure to limit the insulation plate in the shell.

In embodiments of the invention, the limited structure may be a plurality of convex plates or grooves fixed on the inner wall of the shell, the convex plates may be located on two parallel inner walls of the shell, the grooves may be clamped with an edge of the insulation plate to clamp the insulation plate in the shell, and the grooves may be located on two parallel inner walls of the shell.

In embodiments of the invention, the convex plate may be a spherical crown projecting toward an inside of the shell, and a plurality of the convex plates may be at the same height on the inner wall of the shell.

In embodiments of the invention, the convex plate may be a triangular limit block projecting toward an inside of the shell, a top of the triangular limit block may be provided with a downward inclined guide surface, and a bottom of the triangular limit block may be provided with a limit surface contacting the insulation plate.

In embodiments of the invention, the convex plate may comprise an upper limit block and a lower limit block, the upper limit block may be located on a top of the lower limit block, the upper limit block and the lower limit block may be set at intervals with each other, and a positioning space for clamping the insulation plate may be formed between the upper limit block and the lower limit block.

In embodiments of the invention, the convex plate and the shell may be integrally formed of aluminum alloy materials, and the convex plate may be close to the top opening of the shell.

In embodiments of the invention, there may be provided a plurality of grooves spaced along a length direction of the insulation plate, and the edge of the insulation plate may be provided with a plurality of bumps adapted to the grooves.

In embodiments of the invention, the secondary battery may further comprise at least one double-sided protective adhesive layer, both sides of the double-sided protective adhesive layer may be bonding surfaces, each tab may be welded on a top surface of the transfer conductor and may form a welding area on the top surface, wherein the double-sided protective adhesive layer may be attached to the top surface of the transfer conductor and at least covers the welding area.

In embodiments of the invention, the double-sided protective adhesive layer may comprise two adhesive layers and a carbonate protective layer, and the carbonate protective layer may be set between the two adhesive layers.

In embodiments of the invention, the carbonate protective layer may be sodium bicarbonate or sodium carbonate layer structure.

In embodiments of the invention, the adhesive layer may be a double-sided adhesive layer, and the carbonate protective layer may be a powder layer structure laid and adhered between the two adhesive layers.

In embodiments of the invention, the transfer conductor may comprise two separate transfer sheets, the double-sided protective adhesive layer may be a whole sheet structure, and may be attached to cover the welding area on the two transfer sheets simultaneously.

In embodiments of the invention, the transfer conductor may comprise two separate transfer sheets, the double-sided protective adhesive layer may be provided with a plurality of sheets, and each sheet of the double-sided protective adhesive layer may be respectively attached to cover one or more of the welding areas on the transfer sheet.

In embodiments of the invention, the transfer conductor may be provided with a transfer conductor pole and a liquid injection hole, the double-sided protective adhesive layer may be provided with a first hole position corresponding to the transfer conductor pole and a second hole position corresponding to the liquid injection hole, wherein shape and size of the first hole position may be consistent with a circumference of the transfer conductor pole, and shape and size of the second hole position may be consistent with a circumference of the liquid injection hole.

In embodiments of the invention, the double-sided protective adhesive layer may completely cover the transfer conductor, and both ends of the double-sided protective adhesive layer may extend beyond two sides of the insulation plate and may be adhered to an outer wall of the electric cell assembly.

According to another aspect of the invention, there is provided a method for assembling a secondary battery according to any of the above embodiments, characterized in that, the method comprises the following steps:
laminating a multilayer of electrode sheets protruding from the electric cell, and ultrasonically pre-welding the electrode sheets into the tab;
bundling a plurality of the electric cells side by side, and combining the plurality of electric cells into the electric cell assembly;
setting the insulation plate on the top of the electric cell assembly, while the tab of each electric cell passes through the plate tab matching part on the insulation plate;
setting the transfer conductor on the top of the insulation plate, and making the tab of each electric cell further pass through the transfer conductor tab assembly part on the transfer conductor;
bending the tab passing through the transfer conductor tab assembly part, and attaching and welding the bent tab with a top surface of the transfer conductor to form the secondary battery assembly;
setting a top cover on the top of the secondary battery assembly to connect the transfer conductor, while a pole of the top cover is electrically connected with the transfer conductor;
installing the secondary battery assembly into a shell with top opening, and sealing the secondary battery assembly in the shell with the top cover.

### BRIEF DESCRIPTION OF THE DRAWINGS

The features and performance of the invention are further described by the following embodiments and the accompanying drawings.
Figure 1 is a schematic diagram of the secondary battery assembly in the secondary battery of an embodiment of the present application before the tab is bent;
Figure 2 is a schematic diagram of a cell in the secondary battery of the embodiment of an embodiment of the present application;
Figure 3 is an exploded schematic diagram of the assembly structure of the secondary battery assembly in an embodiment of the present application;
Figure 4A is a schematic diagram of a first embodiment of the transfer conductor in the secondary battery of an embodiment of the present application;
Figure 4B is a schematic diagram of the electric cell assembly assembled with the transfer conductor of Figure 4A;
Figure 4C is a three-dimensional diagram of the assembly structure of the secondary battery assembly equipped with the transfer conductor of Figure 4A and the electric cell assembly of Figure 4B;
Figure 4D is a sectional view of Figure 4C along line A1A1';
Figure 5 is a schematic diagram of a second embodiment of the transfer conductor in the secondary battery of an embodiment of the present application;
Figure 6A is a schematic diagram of a third embodiment of the transfer conductor in the secondary battery of an embodiment of the present application;
Figure 6B is a sectional view of Figure 6A along line A2A2';
Figure 7 is a schematic diagram of a fourth embodiment of the transfer conductor in the secondary battery of an embodiment of the present application;
Figure 8A is a schematic diagram of a fifth embodiment of the transfer conductor in the secondary battery of an embodiment of the present application;
Figure 8B is a three-dimensional schematic diagram of the assembly structure of a secondary battery assembly equipped with a transfer conductor 800;
Figures 9A and 9B are schematic diagrams of a first embodiment of the insulation plate in the secondary battery of an embodiment of the present application;
Figure 9C is a sectional view of the vertical plane of Figure 9A along line A3A3';
Figure 9D is an enlarged view of area B1 in Figure 9C;
Figure 10 is a top view of a second embodiment of the insulation plate in the secondary battery of an embodiment of the present application;
Figure 11 is a top view of a third embodiment of the insulation plate in the secondary battery of an embodiment of the present application;
Figure 12 is a top view of a fourth embodiment of the insulation plate in the secondary battery of an embodiment of the present application;
Figure 13A is an exploded schematic diagram of the assembly structure of a secondary battery assembly with staggered tabs in an embodiment of the present application;
Figure 13B shows the structure diagram of Figure 13A after assembly;
Figure 14A is an exploded schematic diagram of the assembly structure of a secondary battery assembly with merged tabs in an embodiment of the present application;
Figure 14B shows the structure diagram of Figure 14A after assembly;
Figure 15A is a schematic diagram of a first embodiment of the secondary battery assembly in the secondary battery of an embodiment of the present application;
Figure 15B is a sectional view along line A4A4' when the tab in the secondary battery assembly shown in Figure 15A is not bent;
Figure 15C is a sectional view of the secondary battery assembly shown in Figure 15A along line A4A4';
Figure 15D is an exploded schematic diagram of the assembly structure of the secondary battery assembly shown in Figure 15A;
Figure 16A is a schematic diagram of a second embodiment of the secondary battery assembly in the secondary battery of an embodiment of the present application;
Figure 16B is a sectional view along line A5A5' when the tab in the secondary battery assembly shown in Figure 16A is not bent;
Figure 16C is a sectional view of the secondary battery assembly shown in Figure 16A along line A5A5';
Figure 16D is an exploded schematic diagram of the assembly structure of the secondary battery assembly shown in Figure 16A;
Figure 17A is a schematic diagram of a third embodiment of the secondary battery assembly in the secondary battery of an embodiment of the present application;
Figure 17B is a sectional view along line A6A6' when the tab in the secondary battery assembly shown in Figure 17A is not bent;
Figure 17C is a sectional view of the secondary battery assembly shown in Figure 17A along line A6A6';
Figure 17D is an exploded schematic diagram of the assembly structure of the secondary battery assembly shown in Figure 17A;
Figure 18A is a schematic diagram of a fourth embodiment of the secondary battery assembly in the secondary battery of an embodiment of the present application;
Figure 18B is a sectional view along line A7A7' when the tab in the secondary battery assembly shown in Figure 18A is not bent;
Figure 18C is a sectional view of the secondary battery assembly shown in Figure 18A along line A7A7';
Figure 18D is an exploded schematic diagram of the assembly structure of the secondary battery assembly shown in Figure 18A;
Figure 19A is a schematic diagram of a fifth embodiment of the secondary battery assembly in the secondary battery of an embodiment of the present application;
Figure 19B is a sectional view along line A8A8' when the tab in the secondary battery assembly shown in Figure 19A is not bent;
Figure 19C is a sectional view of the secondary battery assembly shown in Figure 19A along line A8A8';
Figure 19D is an exploded schematic diagram of the assembly structure of the secondary battery assembly shown in Figure 19A;
Figure 20A is a schematic diagram of the external structure of the secondary battery in an embodiment of the present application;
Figure 20B is an exploded schematic diagram of the secondary battery of the embodiment shown in Figure 20A;
Figure 20C is a sectional view of Figure 20A along line A9A9';
Figure 21 is a schematic diagram of a shell of a secondary battery according to an embodiment of the present application;
Figure 22 is a schematic diagram of the secondary battery assembly of an embodiment of the present application after being installed into the shell;
Figures 23A to 23D are side sectional views of the shell of the secondary battery in an embodiment of the present application;
Figures 24A and 24B are top views of the secondary battery assembly of an embodiment of the present application;
Figure 25 is a schematic diagram of a secondary battery assembly including a double-sided protective adhesive layer in an embodiment of the present application;
Figure 26 is a sectional view of the double-sided protective adhesive layer in the secondary battery assembly of an embodiment of the present application;
Figure 27 is an exploded schematic diagram of the secondary battery assembly of the embodiment shown in Figure 25;
Figure 28 is an exploded schematic diagram of a secondary battery assembly including a double-sided protective adhesive layer in an embodiment of the present application.

### PREFERRED EMBODIMENTS OF THE INVENTION

In order to make the purposes, technical solutions and advantages of the embodiments of the application more clearly, the following will describe the technical solutions in the embodiments of the application clearly and completely in combination with the drawings in the embodiments of the application. Obviously, the described embodiments are part of but not all of the embodiments of the application. Based on the embodiments in the application, all other embodiments obtained by ordinary technicians in the art without doing creative work belong to the scope of protection in the application.

The secondary batteries of the application comprise but are not limited to secondary lithium ion batteries, nickel hydrogen batteries, nickel chromium batteries, lead acid batteries, polymer lithium ion batteries, sodium batteries, etc.

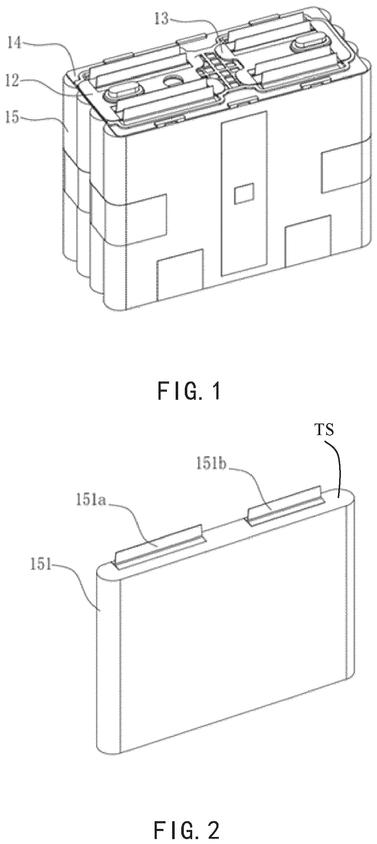

As shown in Fig. 1 and Fig. 2, the first aspect of the embodiment of the application provides a secondary battery, which comprises a secondary battery assembly, which comprises an electric cell assembly, a transfer conductor and an insulation plate 14. The electric cell assembly comprises at least two electric cells 15 arranged side by side, the top surface TS of the electric cell 15 extends out with tabs, and the tabs comprise a positive tab 151a and a negative tab 151b located on both sides of the top surface TS of the electric cell 15. The electric cell 15 is made by winding or stacking, and comprises a positive electrode sheet, a negative electrode sheet and a diaphragm for separating the positive electrode sheet and the negative electrode sheet. The positive electrode sheet and negative electrode sheet both comprise the coated part coated with active substance and the uncoated part with no active substance. Because the materials of the active substance coated on the positive electrode sheet and negative electrode sheet are different, the positive electrode sheet and negative electrode sheet can have different polarities from each other. Referring to Fig. 2, the uncoated part of the positive electrode sheet forms the positive tab 151a, the uncoated part of the negative electrode sheet forms the negative tab 151b, and the positive tab 151a and the negative tab 151b extend from the top TS of the electric cell 15 respectively.

As shown in Fig. 1, the transfer conductor is a transfer sheet, and the secondary battery comprises two transfer sheets, namely, a positive transfer sheet 12 and a negative transfer sheet 13. The positive transfer sheet 12 is an aluminum piece and the negative transfer sheet 13 is a copper piece. The transfer conductor tab assembly part comprises a positive assembly hole on the positive transfer sheet 12 and a negative assembly hole on the negative transfer sheet 13. The positive assembly hole is above the positive tab and the negative assembly hole is above the negative tab. The projection area of the tab in the height direction is located inside the projection area of the transfer conductor tab assembly part in the height direction, that is, the width and length of the tab should be less than or equal to the width and length of the transfer conductor tab assembly part, so as to ensure that the tab can pass through the corresponding transfer conductor tab assembly part. It should be noted that one tab comprises multilayer electrode sheets protruding from the electric cell. The multilayer electrode sheets are folded into one tab by ultrasonic welding, and the folded position is directly below the transfer conductor tab assembly part. In one embodiment, the projection of the positive assembly hole coincides with the positive tab passing through the positive assembly hole in the height direction, that is, the positive assembly hole of the positive transfer sheet 12 is located directly above the positive tab, so as to minimize the distance between the positive tab and the positive transfer sheet 12 and shorten the length of the positive tab. The negative assembly hole coincides with the projection of the negative tab passing through the negative assembly hole in the height direction, that is, the negative assembly hole of the negative transfer sheet 13 is directly above the negative tab, so as to minimize the distance between the negative tab and the negative transfer sheet 13 and shorten the length of the negative tab.

The number of positive and negative assembly holes is set according to the number of electric cell 15 of the electric cell assembly. For example, when the number of electric cell 15 is two, the number of positive and negative assembly holes can be one or two. For example, when the number of electric cell 15 is n and n is a positive integer ≥ 3, the number of positive and negative assembly holes can be n-2. Specifically, as shown in Fig. 1, the number of electric cell 15 is four, so the number of positive and negative assembly holes is two, corresponding to the first tab of two inner electric cells. For another example, if the number of electric cell 15 is six, the number of positive and negative assembly holes is four.

As shown in Fig. 1, the insulation plate 14 is located between the positive transfer sheet 12 and the negative transfer sheet 13 of the electric cell assembly and the transfer conductor. The insulation plate 14 is provided with a plate tab matching part that is used for the tab to pass through. Here, the plate tab matching part is a tab through hole. The insulation plate 14 is arranged above the electric cell 15 and below the positive transfer sheet 12 and the negative transfer sheet 13. The positive transfer sheet 12 and the negative transfer sheet 13 are separated from the electric cell 15 through the insulation plate 14. The number of tab through hole of the insulation plate 14 is at least four. When the number of tab through hole is four, the four tab through holes are respectively located at the four corners of the insulation plate 14, so as to respectively allow the tab of each electric cell 15 to pass through. Due to the existence of the insulation plate 14, when a top cover is assembled with a shell, even under the extrusion of an assembly force, the positive transfer sheet 12 and the negative transfer sheet 13 will not contact the electric cell 15, let alone causing internal short circuit due to contact, thus improving the safety of the secondary battery.

The positive tab and negative tab of the electric cell 15, after being folded up, successively pass through the tab through hole of the insulation plate 14, the positive tab penetrates into the positive assembly hole of the positive transfer sheet 12 and is welded with the positive transfer sheet 12, and the negative tab penetrates into the negative assembly hole of the negative transfer sheet 13 and is welded with the negative transfer sheet 13. Alternatively, the positive tab and the negative tab of the electric cell in the outer side the battery assembly, after being folded up, pass through the tab through hole and the side assembly parts on both sides of the positive transfer sheet 12 and the negative transfer sheet 13 in turn, and then are welded with the positive transfer sheet 12 and the negative transfer sheet 13. The positive tab and negative tab of the remaining inner electric cells shall pass through the tab through hole in turn upward after being folded, the positive tab shall pass through the positive assembly hole of the positive transfer sheet 12 for welding connection with the positive transfer sheet 12, and the negative tab shall pass through the negative assembly hole of the negative transfer sheet 13 for welding connection with the negative transfer sheet 13.

The secondary battery assembly of the embodiment of the application can completely solidify the shape of the tab by folding the tab getting the tabs passed through the insulation plate 14, and rolling and flattening the tab on the transfer conductor for welding and fixing connection. The path from each layer of tab to the welding position of the transfer conductor is the same, and the relaxation state is the same. The tab will not be redundant or sink. The tab has no risk of being inserted into the electrode sheet, and the secondary battery has no risk of short circuit. By solidifying the tab shape, the tab will not be squeezed, stressed, damaged or broken, thus improving the performance and extending the service life of the battery. While solidifying the tab shape, the insulation plate 14 acts between the electric cell assembly and the transfer conductor and provides insulation protection to prevent short circuit, and also provides positioning for the transfer conductor.

The secondary battery assembly in the secondary battery of the application is assembled from the electric cell assembly, the transfer conductor, the insulation plate, etc. Therefore, some drawings show the assembly structures including these structures. Some contents of the specification are described in combination with these assembly structures.

In the embodiment of the present application, the transfer conductor in the secondary battery assembly is provided with a transfer conductor tab assembly part for the tab to pass through, and the insulation plate is provided with a plate tab matching part for the tab to pass through. The transfer conductor tab assembly part on the transfer conductor of the secondary battery of the application comprises three types: transfer conductor tab assembly hole, side assembly part and side recessed part. Wherein, the transfer conductor tab assembly hole further comprises the first transfer conductor tab assembly hole and the second transfer conductor tab assembly hole, and the first transfer conductor tab assembly hole is used to allow a tab on an electric cell in the electric cell assembly to pass through. The second transfer conductor tab assembly hole is used to allow two homopolar tabs which have the same polarity on two adjacent electric cells in the electric cell assembly to pass through. One transfer conductor can comprise any combination of these types. The plate tab matching part on the insulation plate comprises two types: the plate tab matching hole and the plate side recessed part. The tab through hole on the above insulation plate belongs to the plate tab matching hole, wherein, the plate tab matching hole comprises the first plate matching hole and/or the second plate matching hole. Each first plate matching hole is used to allow one tab to pass through. Each second plate matching hole is used to allow a plurality of polar tabs with the same polarity on adjacent electric cells to pass through. An insulation plate can comprise any combination of the various types. The details are described below.

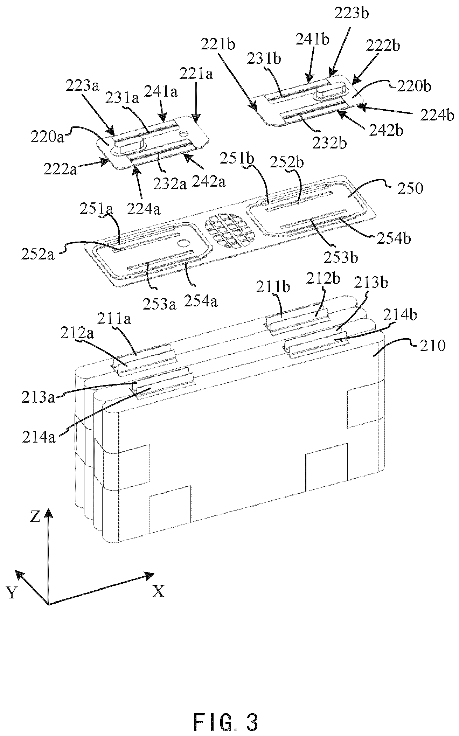

First, use Fig. 3 to illustrate the connection relationship between the electric cell assembly, the transfer conductor and the insulation plate.

Fig. 3 is an exploded schematic diagram of the assembly structure of the secondary battery according to an embodiment of the present application. As shown in Fig. 3, the assembly structure of the secondary battery in this embodiment comprises the electric cell assembly 210, the insulation plate 250 and the transfer conductors 220a and 220b. Fig. 3 shows the three-dimensional coordinate system XYZ, wherein the X direction is the width direction of the secondary battery, the Y direction is the thickness direction of the secondary battery, and the Z direction is the height direction of the secondary battery. The electric cell assembly 210 comprises four electric cells, and the top surface of each electric cell is provided with two extending tabs. There comprises two transfer conductors, namely transfer conductor 220a and transfer conductor 220b. Taking the transfer conductor 220a as an example, each transfer conductor has a first side 221a and a second side 222a extending along the thickness direction Y of the secondary battery, and a third side 223a and a fourth side 224a extending along the width direction X. The transfer conductor 220b also has four sides. The first side 221a of one transfer conductor 220a faces the first side 221b of the other transfer conductor 220b.

It should be noted that the transfer conductors 220a and 220b in Fig. 3 can respectively correspond to the positive transfer sheet 12 and the negative transfer sheet 13 shown in Fig. 1.

In some embodiments, the transfer conductor tab assembly part comprises the transfer conductor tab assembly hole. The transfer conductor tab assembly hole is a through hole located inside the transfer conductor. Some or all of the folded tabs pass through the plate tab matching part and the transfer conductor tab assembly hole in turn, and then are welded with the transfer conductor.

As shown in Fig. 3, the transfer conductor 220a is provided with transfer conductor tab assembly holes 231a and 232a, which respectively correspond to the tabs 212a and 213a of the inner electric cell. The transfer conductor 220b is provided with transfer conductor tab assembly holes 231b and 232b, which respectively correspond to the tabs 212b and 213b of the inner electric cell. For example, the transfer conductor tab assembly holes 231a and 232a are positive assembly holes, and the transfer conductor tab assembly holes 231b and 232b are negative assembly holes. In this embodiment, part of the tabs pass through the plate tab matching part and the transfer conductor tab assembly hole, and then are welded with the transfer conductor.

In other embodiments, the transfer conductor can be an integral transfer sheet, such as the integral transfer sheet formed by connecting the positive transfer sheet 12 and the negative transfer sheet 13 in Fig. 1 through insulating materials. This specification takes the transfer conductor set separately as an example.

In some embodiments, the transfer conductor tab assembly part comprises a side assembly part, which is located on the third side and/or the fourth side of the transfer conductor. Some or all of the folded tabs successively pass through the plate tab matching part and warp over the side assembly part in turn, and then are welded with the transfer conductor.

As shown in Fig. 3, taking the transfer conductor 220a as an example, the side assembly part 241a is located at the third side 223a, and the side assembly part 242a is located at the fourth side 224a, which respectively correspond to the tabs 211a and 214a of the outer electric cell. Similarly, in the transfer conductor 220b, the side assembly part 241b is located at the third side 223b, and the side assembly part 242b is located at the fourth side 224b, corresponding to the tabs 211b and 214b of the outer electric cell respectively. In this embodiment, part of the tabs pass through the plate tab matching parts in turn and warp over the side assembly part before being welded with the transfer conductor.

The insulation plate 250 in Fig. 3 is an embodiment of the insulation plate, in which the plate tab matching parts 251a, 252a, 253a, 254a, 251b, 252b, 253b and 254b are marked, which respectively correspond to the tab 211a, 212a, 213a, 214a, 211b, 212b, 213b and 214b.

In the embodiment shown in Fig. 3, the inner electric cell is located inside the electric cell assembly, and the tab 212a, 212b, 213a and 213b of the inner electric cell is the first tab. The folded first tab passes through the plate tab matching parts 252a, 252b, 253a, 253b and the transfer conductor tab assembly holes 231a, 231b, 232a, 232b, and then is welded with the transfer conductor. The outer electric cell is located at the outer side of the electric cell assembly and comprises the two electric cells at the outermost side of the electric cell assembly. The tabs 211a, 211b, 214a and 214b of the outer electric cell are the second tab. The folded second tab passes through the plate tab matching parts 251a, 251b, 254a and 254b and wrap up the side assembly parts 241a, 241b, 242a and 242b in turn, and then is welded with the transfer conductor.

In the following section, embodiments of several transfer conductors will be described first with reference to the drawings.

### Embodiment 1 of transfer conductor

In some embodiments, the transfer conductor tab assembly hole comprises the first transfer conductor tab assembly hole and/or the second transfer conductor tab assembly hole, and the positive or negative tab on one of the electric cells in the electric cell assembly passes through the first transfer conductor tab assembly hole. Two positive tabs or two negative tabs on two adjacent electric cells in the electric cell assembly pass through the second transfer conductor tab assembly hole.

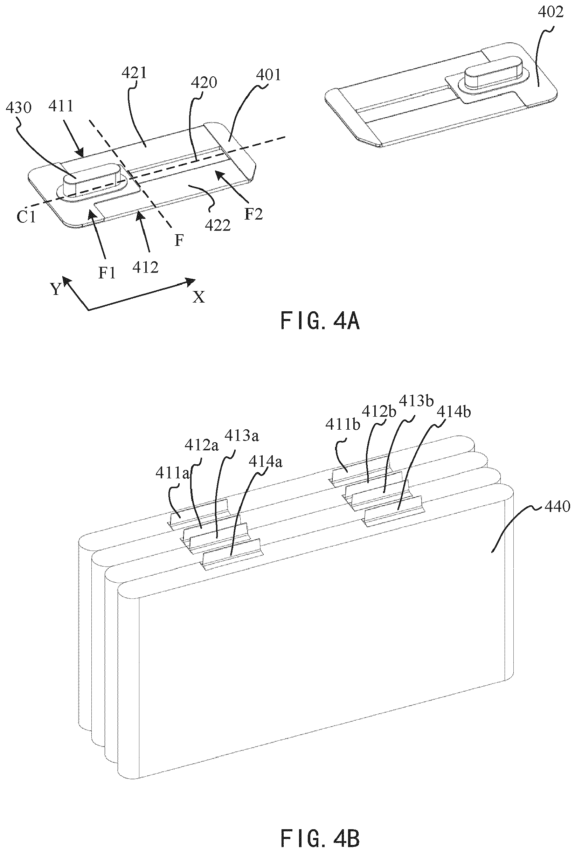

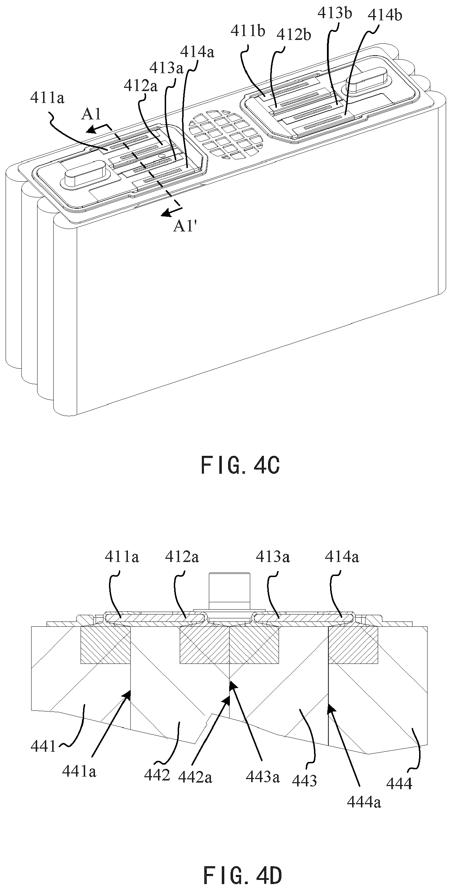

As shown in Fig. 4A, the embodiment comprises two transfer conductors 401 and 402. Take the transfer conductor 401 as an example, it includes the second transfer conductor tab assembly hole 420 and the side assembly parts 411 and 412, which are respectively located in the sinking platform 421 and 422. The depth of the sinking platform 421 and 422 is greater than or equal to the thickness of the tab and less than the thickness of the transfer sheet. By setting the sinking platform, after bending the tab, the height of the transfer conductor will not be increased and the space utilization ratio from the top of the electric cell assembly to the top cover can be further improved. Fig. 4B is the electric cell assembly 440 corresponding to the transfer conductor of Fig. 4A, Fig. 4C is the three-dimensional view after the tab is bent, and Fig. 4D is the sectional view of Fig. 4C along line A1A1'. In combination with Figs. 4A to 4D, the second transfer conductor tab assembly hole 420 is used to make the two positive tabs 412a and 413a from the inner side pass through and be bent outward respectively, and the side assembly parts 411 and 412 are used to make the positive tabs 411a and 414a from the outer side warp over and be bent inward respectively. The transfer conductors 401 and 402 are suitable for matching the electric cell assembly 440 composed of four electric cells, and the positive and negative tabs on each electric cell are aligned.

As shown in Fig. 4A, the transfer conductor is provided with the central axis C1 of the transfer conductor, which extends along the width direction X of the secondary battery. The second transfer conductor tab assembly hole 420 is located on the central axis C1 of the transfer conductor, and the second transfer conductor tab assembly hole 420 is symmetrical to the vertical plane where the central axis C1 of the transfer conductor is located.

In this embodiment, the transfer conductor 401 also comprises the transfer conductor pole 430, which is used to electrically connect the tab and the corresponding pole on the top cover of the secondary battery.

It should be noted that the transfer conductors 401 and 402 shown in Fig. 4A can be adapted to the electric cell assembly with tab set from inner side of each cell in the electric cell assembly. Fig. 4B is an electric cell assembly with tab set inside of each electric cell. This cell assembly will be described in detail later.

### Embodiment 2 of transfer conductor

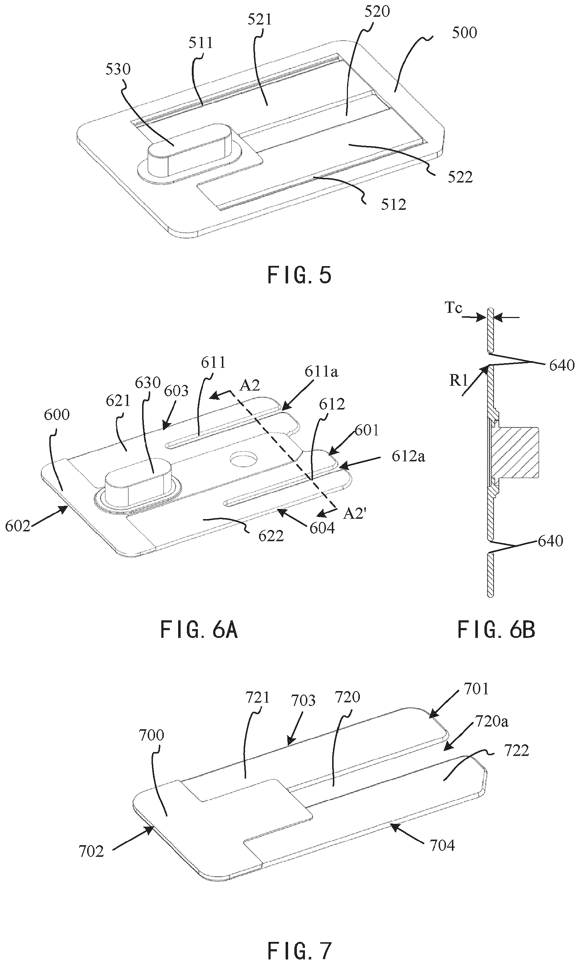

Fig. 5 is a schematic diagram of a second embodiment of the transfer conductor in the secondary battery of an embodiment of the present application. The transfer conductor of the embodiment simultaneously comprises a first transfer conductor tab assembly hole and a second transfer conductor tab assembly hole. As shown in Fig. 5, the transfer conductor 500 of this embodiment comprises two first transfer conductor tab assembly holes 511 and 512, one second transfer conductor tab assembly hole 520, a sinking platform 521 and 522, and the transfer conductor pole 530. The transfer conductor 500 is suitable for matching the electric cell assembly composed of four electric cells.

### Embodiment 3 of transfer conductor

In some embodiments, the secondary battery comprises two transfer conductors, each of which has a first side and a second side extending along the thickness direction of the secondary battery, the transfer conductor tab assembly hole has an opening on the first side, and the first side of each transfer conductor faces the first side of the other transfer conductor.

In some embodiments, the first transfer conductor tab assembly hole has a first opening on the first side.

Fig. 6A is a schematic diagram of a third embodiment of the transfer conductor in the secondary battery of an embodiment of the present application. As shown in Fig. 6A, the transfer conductor 600 has a first side 601 and a second side 602, the first transfer conductor tab assembly hole 611 has a first opening 611a on the first side 601, and the first transfer conductor tab assembly hole 612 has a first opening 612a on the first side 601. As shown in Fig. 6A, the transfer conductor of this embodiment also comprises the sinking platforms 621 and 622, and the transfer conductor pole 630. The transfer conductor 600 is suitable for matching the electric cell assembly composed of two electric cells. If the third side 603 and the fourth side 604 are used as the side assembly parts respectively, the transfer conductor 600 is suitable for matching the electric cell assembly composed of four electric cells.

The first transfer conductor tab assembly hole is provided with a first opening, which is beneficial for making the tab enter into the first transfer conductor tab assembly hole from the first opening during assembly, and the operation is convenient.

Fig. 6B is a sectional view of Fig. 6A along line A2A2'. As shown in Fig. 6B, in some embodiments, the boundary between the transfer conductor tab assembly part 600 and the upper surface of the transfer conductor and/or the lower surface of the transfer conductor is a fillet structure 640. The radius of the fillet of the fillet structure R1 is 0.1mm ≤ R1 ≤ (Tc-Hd) T2/2, wherein Tc is the thickness of the transfer sheet and Hd is the depth of the sinking plate.

### Embodiment 4 of transfer conductor

In some embodiments, the second transfer conductor tab assembly hole has a second opening on the first side.

Fig. 7 is a schematic diagram of a fourth embodiment of the transfer conductor in the secondary battery of an embodiment of the present application. As shown in Fig. 7, the transfer conductor 700 of this embodiment has a first side 701 and a second side 702. The transfer conductor 700 only comprises a second transfer conductor tab assembly hole 720, and the second transfer conductor tab assembly hole 720 has a second opening 720a on the first side 701. The second transfer conductor tab assembly hole 720 is located between the sinking platform 721 and the sinking platform 722. The transfer conductor 700 of the embodiment does not comprise the transfer conductor pole. The transfer conductor 700 is suitable for matching the electric cell assembly composed of two electric cells. If the third side 703 and the fourth side 704 are used as the side assembly parts respectively, the transfer conductor 700 is suitable for matching the electric cell assembly composed of four electric cells.

By providing the second transfer conductor tab assembly hole with a second opening, it is advantageous to make the tab enter the second transfer conductor tab assembly hole from the second opening during assembly, and the operation is convenient.

### Embodiment 5 of transfer conductor

In some embodiments, the transfer conductor tab assembly part also comprises a side recessed part, which is located on the third side and/or the fourth side of the transfer conductor. The side recessed part is recessed into the interior of the transfer conductor, and the side recessed part is used to allow the corresponding tab to pass through and be bent towards the interior of the transfer conductor.

In some embodiments, the side assembly part and a plurality of side recessed parts are sequentially connected to form a stepped structure. The stepped structure is indented to the inside of the transfer conductor from the second side to the first side, or the stepped structure is indented to the inside of the transfer conductor from the first side to the second side in turn.

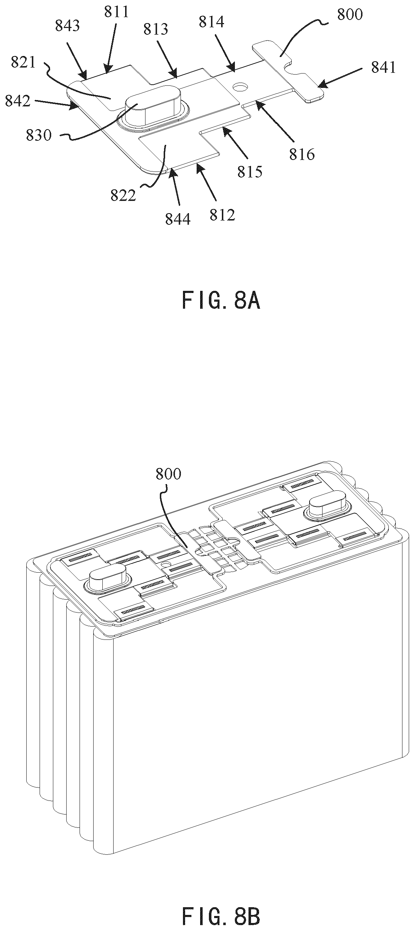

Fig. 8A is a schematic diagram of a fifth embodiment of the transfer conductor in the secondary battery of an embodiment of the present application. As shown in Fig. 8A, the transfer conductor 800 is provided with a first side 841, a second side 842, a third side 843 and a fourth side 844. The third side 843 is provided with a side assembly part 811 and two side recessed parts 813 and 814, and the side assembly parts 811, side recessed parts 813 and 814 form a stepped structure in turn. The fourth side 844 is provided with a side assembly part 812 and two side recessed parts 815 and 816, and the side assembly part 812, the side recessed parts 815 and 816 form a stepped structure in turn.

Fig. 8B is a three-dimensional schematic diagram of the assembly structure of a secondary battery equipped with a transfer conductor 800. As shown in Fig. 8B, the tab is bent inward from the side assembly part and the side recessed part. Such an embodiment has the beneficial effect of facilitating the tab penetrating and simplifying the installation process.

It should be noted that the transfer conductor 800 shown in Fig. 8A and Fig. 8B is suitable for matching with an electric cell assembly with staggered tabs, and Fig. 8A is an electric cell assembly with staggered tabs. This electric cell assembly will be described later.

Embodiments 1 to 5 of the above transfer conductor do not enumerate all structures of the transfer conductor required to be protected in the application. The transfer conductor tab assembly part on the transfer conductor of the present application can comprise any combination of one or more the first transfer conductor tab assembly hole, the second transfer conductor tab assembly hole, the side assembly part and the side recessed part, all of which are within the scope of protection required by the present application. It should be noted that the electric cell assembly, transfer conductors and insulation plates in the secondary battery are used together. Therefore, the structures of the insulation plates and electric cell assembly corresponding to different transfer conductors may be different.

In some embodiments, the insulation plate has a first plate side and a second plate side extending along the width direction of the secondary battery, the first plate side and the second plate side are arranged oppositely, the plate tab matching part comprises a plate tab matching hole and/or a plate side recessed part, the plate tab matching hole is a through hole through the insulation plate, and the plate side recessed part is located at the first plate side and/or the second plate side, the plate side recessed part is recessed toward the interior of the insulation plate.

The following describes the embodiments of several insulation plates in the secondary battery assembly of the present application in combination with the drawings.

### Embodiment 1 of insulation plate

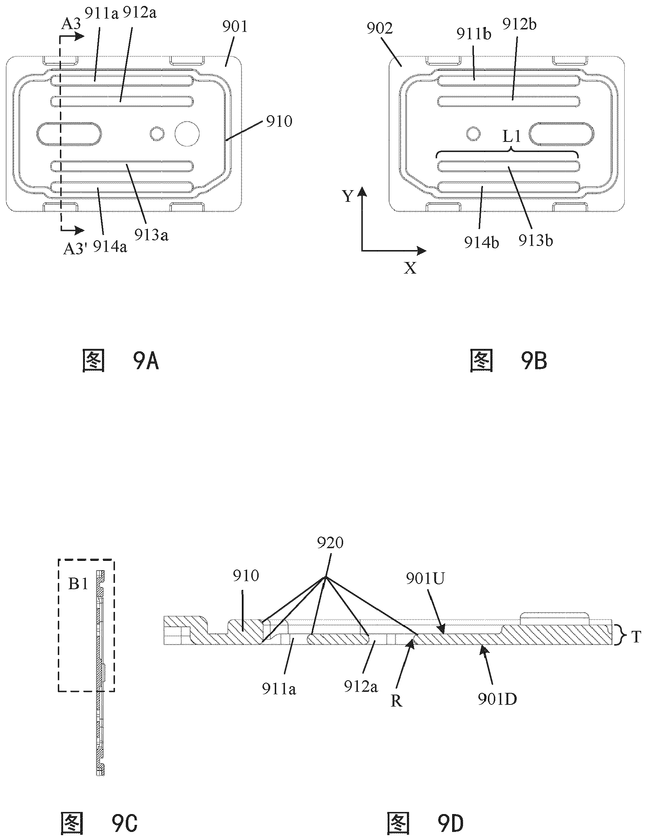

The insulation plate of the embodiment comprises two separated insulation plates 901 and 902. Fig. 9A is a top view of an insulation plate 901 in an embodiment of the present application, and Fig. 9B is a top view of another insulation plate 902 in an embodiment of the present application. In the embodiment, the plate tab matching part comprises the plate tab matching hole. The plate tab matching holes 911a, 912a, 913a, 914a on the insulation plate 901 and the plate tab matching holes 911b, 912b, 913b, 914b on the insulation plate 902 are symmetrically distributed with each other.

In this embodiment, each plate tab matching hole is a long strip shaped through-hole extending along the width direction X of the secondary battery, which is parallel to each other. Assuming that the plate tab matching hole has a first length L1 along the width direction, the first length L1 of each tab assembly part is equal.

Referring to Fig. 9A, in some embodiments, the insulation plate 901 also comprises a positioning reinforcing structure 910 that protrudes from the upper surface, and the positioning reinforcing structure 910 is arranged around the periphery of the plate tab matching part. Specifically, the positioning reinforcing structure 910 is a kind of reinforcing rib with a certain thickness. Fig. 9C is a sectional view of the vertical plane of Fig. 9A along the line A3A3' (the vertical plane is the plane parallel to the YZ plane), and Fig. 9D is an enlarged view of area B1 in Fig. 9C. Fig. 9D shows the structure in area B1 horizontally placed and magnified. As shown in Fig. 9D, the positioning reinforcing structure 910 protrudes obviously from the upper surface 901U of the insulation plate 901.

As shown in Fig. 9D, in some embodiments, the thickness of the insulation plate is T, the range of the thickness is 0.1mm ≤ T ≤ 2mm, and the preferred range of T is 0.4-0.8mm.

As shown in Fig. 9D, the boundary between the plate tab matching holes 911a and 912a and the upper surface 901U and the lower surface 901D has a fillet structure 920. The size of the fillet radius R of the fillet structure 920 is 0.1mm ≤ R ≤ T/2, and T is the thickness of the insulation plate.

The insulation plates 901 and 902 are suitable for matching the electric cell assembly composed of four electric cells, and are also suitable for the transfer conductor matched with four electric cells.

### Embodiment 2 of insulation plate

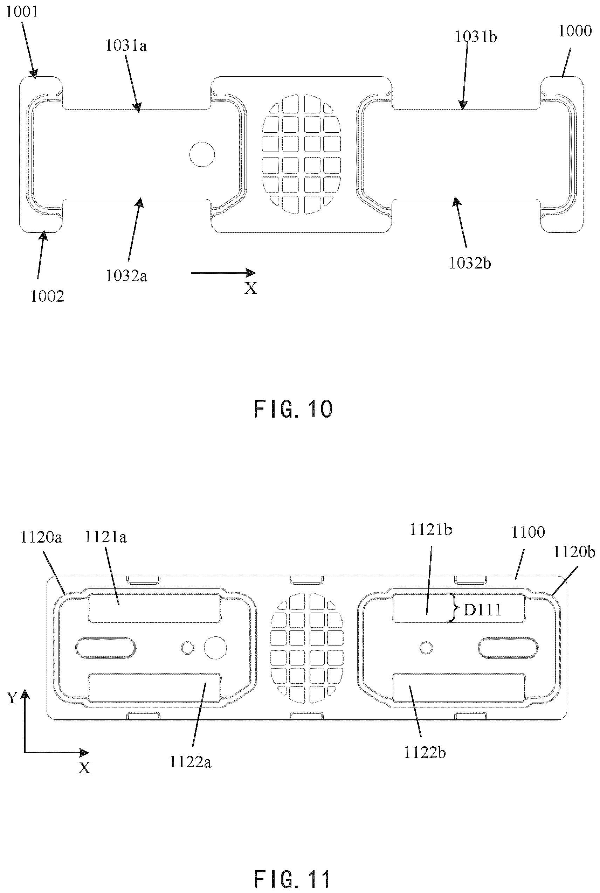

Fig. 10 is a top view of a second embodiment of the insulation plate in the secondary battery of an embodiment of the present application. As shown in Fig. 10, the insulation plate 1000 is an integrated insulation plate, which is provided with a first plate side 1001 and a second plate side 1002 opposite to each other along the X direction. The plate tab matching part in this embodiment includes the side recessed parts 1031a, 1031b, 1032a, 1032b, wherein, the side recessed parts 1031a, 1031b are located at the first plate side 1001 and the side recessed parts 1032a, 1032b are located at the second plate side 1002.

The insulation plate 1000 is suitable for matching the electric cell assembly composed of two electric cells, and is also suitable for the transfer conductor matched with two electric cells.

In some embodiments, the plate tab matching part on the insulation plate simultaneously comprises the plate tab matching hole and the plate side recessed part, wherein, the plate side recessed part corresponds to the outer tab, and the plate tab matching hole corresponds to the remaining inner tab. It is suitable for matching with an electric cell assembly including a plurality of cells to form a thicker secondary battery.

### Embodiment 3 of insulation plate

The plate tab matching holes comprise the first plate matching hole and/or the second plate matching hole. Each first plate matching hole is used to allow one tab to pass through, and each second plate matching hole is used to allow multiple tabs with the same polarity on the adjacent electric cells to pass through. The plate tab matching holes in the embodiment shown in Fig. 9A are all the first plate matching holes, which are used to allow one tab pass through.

Fig. 11 is a top view of a third embodiment of the insulation plate in the secondary battery of an embodiment of the present application. As shown in Fig. 11, the insulation plate 1100 is an integrated insulation plate, including a set of second plate matching holes 1121a, 1122a, another set of second plate matching holes 1121b, 1122b, and positioning reinforcement structures 1120a, 1120b. Compared with the first plate matching hole, the width D111 of the second plate matching hole along the Y direction is obviously larger, which can be used to allow at least two tabs of the same polarity of adjacent electric cells to pass through at the same time. The insulation plate 1100 is suitable for matching the electric cell assembly composed of four electric cells, and is also suitable for the transfer conductor matched with four electric cells.

In some embodiments, the width of the second plate matching hole along the Y direction can be wider than that shown in Fig. 11. In extreme cases, the second plate matching holes 1121a and 1122a are interconnected. It can be understood that the wider the second plate matching hole is, the more tabs can be passed through.

### Embodiment 4 of insulation plate

In some embodiments, the insulation plate is provided with a plurality of first plate matching holes. The secondary battery has a first central axis E1 extending along its width direction X, and a plurality of first plate matching holes are symmetrically distributed with the vertical plane of the first central axis E1 as the symmetrical plane. The secondary battery also has a second central axis E2 extending along its thickness direction Y, and the plurality of first plate matching holes are symmetrically distributed with the vertical plane of the second central axis E2 as the symmetry plane. Divide a plurality of plate tab matching parts into two parallel groups on the vertical plane where the second central axis E2 is located (the vertical plane is the plane parallel to the YZ plane). Each parallel group comprises N plate tab matching parts. Divide the N plate tab matching parts into two vertical groups on the vertical plane where the first central axis E1 is located (the vertical plane is the plane parallel to the YZ plane). Each vertical group comprises N/2 plate tab matching parts, There is a first distance between N/2 plate tab matching parts and the vertical plane (the vertical plane is parallel to the YZ plane) where the first central axis E1 is located, and a second distance between N/2 plate tab matching parts and the vertical plane (the vertical plane is parallel to the YZ plane) where the second central axis E2 is located. The second distance increases or decreases with the increase of the first distance, where N is an even number greater than or equal to four.

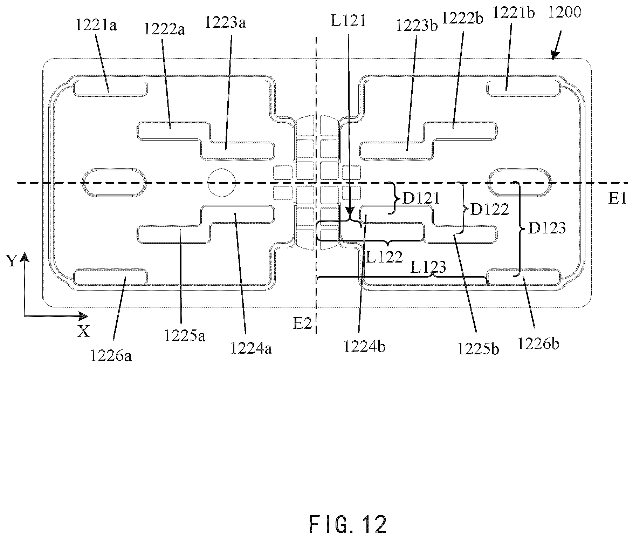

Fig. 12 is a top view of a fourth embodiment of the insulation plate in the secondary battery of an embodiment of the present application. In the embodiment shown in Fig. 12, the insulation plate 1200 of the embodiment comprises 12 plate tab matching parts, which are all the first plate matching holes, including the first plate matching holes 1221a~1226a and 1221b~1226b. In this embodiment, N=6. Taking the first plate matching holes 1221b~1226b as an example, the first plate matching hole 1224b has a first distance D121 and a second distance L121, the first plate matching hole 1225b has a first distance D122 and a second distance L122, and the first plate matching hole 1226b has a first distance D123 and a second distance L123, D123>D122>D121 and L123>L122>L121, that is, the second distance increases with the increase of the first distance.

In some embodiments, in each vertical group, at least two plate tab matching parts are connected with each other to form a zigzag connected pattern. As shown in Fig. 12, the tab assembly sections 1222a and 1223a are connected, and the connected pattern is zigzag.

In combination with Fig. 8B and Fig. 12, the insulation plate 1200 is suitable for the six-core electric cell assembly shown in Fig. 8B.

Embodiments 1 to 4 of the above insulation plate do not enumerate all structures of the insulation plate required to be protected in the application. The plate tab matching part on the insulation plate of the application can comprise any combination of one or more the first plate matching hole, the second plate matching hole and the plate side recessed part, all of which are within the scope of protection required by the application. Similarly, different insulation plates may correspond to different transfer conductors and electric cell assembly.

In some embodiments, each electric cell has a first side and a second side which are oppositely arranged along the thickness direction of the electric cell assembly, wherein the first side of each electric cell is arranged close to the inner side of the electric cell assembly, and the second side of each electric cell is arranged close to the outer side of the electric cell assembly. In the thickness direction of the electric cell assembly, the tab extends from the top surface of the electric cell near the first side. The tab extends from the top surface of the electric cell near the first side, which can reduce the internal resistance of the secondary battery and greatly improve the voltage platform and battery performance. An embodiment of a cell assembly with tabs arranged on the inner side of each cell is described below with reference to the drawings.

As shown in Figs. 4A to 4D, in this embodiment, the electric cell assembly 440 comprises four electric cells, namely, electric cells 441, 442, 443 and 444. The first side of each electric cell is marked in Fig. 4D, namely, the first side 441a, 442a, 443a and 444a. In the thickness direction of the electric cell assembly 440, positive tabs 411a, 412a, 413a, 414a and negative tabs 411b, 412b, 413b and 414b protrude from the top surface of the corresponding electric cell near the first side.

An example is further illustrated in combination with the transfer conductor 401. As shown in Fig. 4A, the upper surface of the transfer conductor 401 is divided into the first transfer conductor area F1 and the second transfer conductor area F2 by the separation line F extending along the thickness direction of the electric cell assembly. The transfer conductor pole 430 on the transfer conductor 401 is located in the first transfer conductor area F1, and the second transfer conductor tab assembly hole 420 corresponding to the two electric cells from an inner side of the electric cell assembly is located in the second transfer conductor area F2. The second projection of the transfer conductor pole 430 along the width direction X of the electric cell assembly covers the first projection of the second transfer conductor tab assembly hole 420 along the width direction of the electric cell assembly. According to such an embodiment, it has at least the following three beneficial effects.
(1) The width of the second transfer conductor tab assembly hole 420 along the Y direction is not too wide, so there is no weak point of the conduction current caused by the tab assembly part between the tab of the electric cell near the outer side and the connection part formed by the connection of the transfer conductor 401 and the transfer conductor pole 430. Especially because of the weak point of the conduction current caused by the through hole such as the second transfer conductor tab assembly hole 420, the internal resistance between the connection part formed by connecting the tab of the outer electric cell with the transfer conductor 401 and the transfer conductor pole 430 is reduced, thereby reducing the internal resistance of the secondary battery and greatly improving the voltage platform and performance.
(2) The tab of the two electric cells close to the inner side of the electric cell assembly can be bent toward the outer side of the electric cell assembly after passing through the second transfer conductor tab assembly hole 420 on the transfer conductor 401, and the tab of the other electric cells can be bent toward the inner side of the electric cell assembly after passing through the tab assembly part on the transfer sheet. Therefore, the internal resistance between the connection part formed by connecting the tab of the electric cell near the outer side of the electric cell assembly and the transfer conductor 401 and the transfer conductor pole 430, and the internal resistance between the tab of the electric cell near the inner side of the electric cell assembly and the connection part of the transfer conductor 401 and the transfer conductor pole 430, tend to be consistent, and thus to improve the long-term service performance of the secondary battery.
(3) The tab assembly parts are all set in the second transfer conductor area F2, which can give consideration to the production of the electric cell, and reduce the internal resistance between the tab of the outer electric cell and the connection part formed by connecting the transfer conductor 401 to the transfer conductor pole 430, thereby reducing the internal resistance of the secondary battery and greatly improving the voltage platform and performance.

An embodiment of a cell assembly with staggered tabs is described below with reference to the drawings.

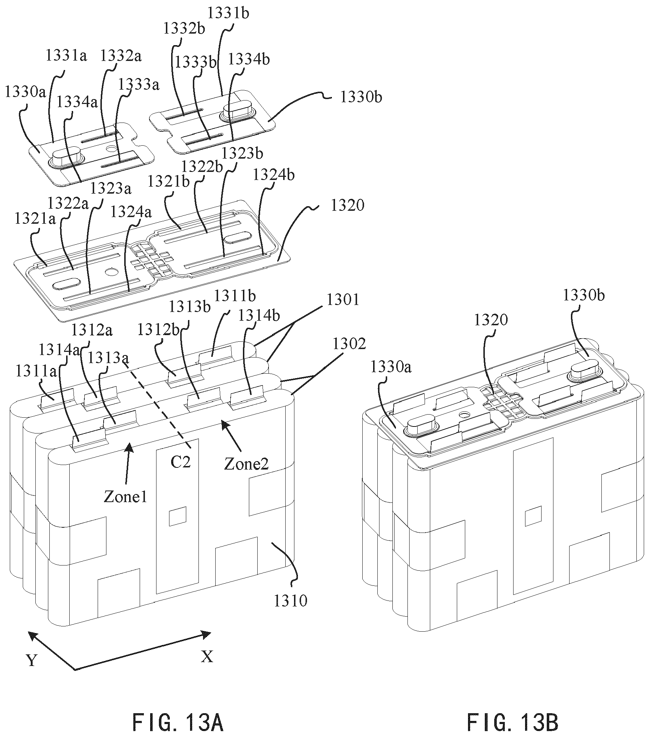

Fig. 13A is an exploded schematic diagram of the assembly structure of a secondary battery with staggered tabs in an embodiment of the present application. As shown in Fig. 13A, the assembly structure comprises an electric cell assembly 1310, an insulation plate 1320, and transfer conductors 1330a and 1330b. In this embodiment, the cell assembly 1310 comprises two cell groups 1301 and 1302, which are adjacent along the thickness direction Y of the secondary battery. Each cell group comprises at least two electric cells, and at least two electric cells in each cell group are successively adjacent along the thickness direction Y. Each electric cell comprises a tab protruding from the top surface of the electric cell. The tab comprises a positive tab and a negative tab. The top surface of a plurality of electric cells forms a plane. The plane is divided into an equal first plane area Zone1 and a second plane area Zone2 by the central axis C2 extending along the thickness direction, wherein all positive tabs are located in the first plane area Zone1, and all negative tabs are located in the second plane area Zone2. The projections of all positive tabs in the first plane area Zone1 of each cell group along the thickness direction Y do not overlap, and the projections of all negative tabs in the second plane area Zone2 of each cell group along the thickness direction Y do not overlap. Specifically, the positive tabs 1311a and 1312a in the cell group 1301 are located in the first plane area Zone1, and they are staggered without overlapping. The negative tabs 1311b and 1312b in the cell group 1301 are located in the second plane area Zone2, and they are staggered without overlap. The positive tabs 1313a and 1314a in the cell group 1302 are located in the first plane area Zone1, and they are staggered without overlapping. The negative tabs 1313b and 1314a in the cell group 1302 are located in the second plane area Zone2, and they are staggered without overlapping.

In some embodiments, the projections of all positive tabs in the first plane area Zone1 in each cell group along the width direction X and height direction Z do not overlap, and the projections of all negative tabs in the second plane area Zone2 in each cell group along the width direction X and height direction Z do not overlap.

As shown in Fig. 13A, the insulation plate 1320 is provided with plate tab matching parts 1321a, 1322a, 1323a, 1324a, 1321b, 1322b, 1323b and 1324b. The transfer conductor 1330a is provided with side assembly parts 1331a, 1334a and first transfer conductor tab assembly holes 1332a and 1333a. The transfer conductor 1330b is provided with side assembly parts 1331b, 1323b and first transfer conductor tab assembly holes 1332b and 1333b.

Fig. 13B shows the structure diagram of Fig. 13A after assembly. The positive tabs 1311a, 1312a, 1313a and 1314a pass through the plate tab matching parts 1321a, 1322a, 1323a, 1324a and the side assembly parts 1331a, the first transfer conductor tab assembly holes 1332a, 1333a and the side assembly part 1334a respectively. The negative tabs 1311b, 1312b, 1313b and 1314b pass through the plate tab matching parts 1321b, 1322b, 1323b, 1324b and the side assembly part 1331b, the first transfer conductor tab assembly holes 1332b, 1333b and the side assembly part 1334b respectively.

According to the embodiments shown in Fig. 13A and Fig. 13B, since each tab in the first plane area or the second plane area of each cell group is staggered, the projection along the thickness direction Y does not overlap. After the tab is bent, the current flowing from the outer tab will not pass through the gap of the corresponding transfer conductor tab assembly hole of the other tab, thus reducing the internal resistance of this part of the circuit and further reducing the internal resistance of the secondary battery. The voltage platform and performance of the secondary battery are improved. In other embodiments, the tab of each electric cell has a tab height, and the tab heights of all the tabs in each cell group are the same. Alternatively, two cell groups are adjacent to each other through an adjacent surface, and each electric cell comprises a plurality of tabs. In each cell group, the height of some or all of the tabs increases with the increase of the distance between the tabs and the adjacent surface.

Figs. 13A and 13B are only an example of staggered tabs. When the number of electric cells increases, the number of the transfer conductor tab assembly part on the transfer conductor and the plate tab matching part on the insulation plate will also be appropriately changed, and its structure can refer to the embodiments shown in Fig. 8A and Fig. 12 respectively.

In some embodiments, the electric cell assembly comprises at least one set of electric cell pairs, each set of electric cell pairs comprises two electric cells that are adjacent to each other, the tabs with the same polarity of the two electric cells that are adjacent to each other are combined into a single pole tab, and the single pole tab passes through the plate tab matching part and the transfer conductor tab assembly part in turn, and then is welded with the transfer conductor.

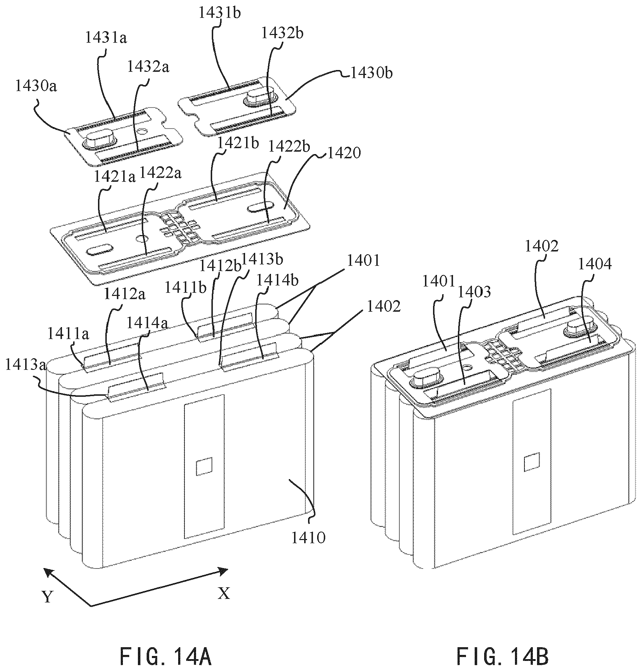

Fig. 14A is an exploded schematic diagram of the assembly structure of a secondary battery with a combined tab according to an embodiment of the present application. Fig. 14B shows the structure diagram of Fig. 14A after assembly. Referring to Figs. 14A and 14B, it comprises the electric cell assembly 1410, including two cell groups 1401 and 1402, wherein the positive tabs 1411a and 1412a of two adjacent electric cells in the cell group 1401 are merged into a single pole tab 1401, and the negative tabs 1411b and 1412b of two adjacent electric cells in the cell group 1401 are merged into a single pole tab 1402. The positive tabs 1413a and 1414a of two adjacent electric cells in the cell group 1402 are combined to form a single pole tab 1403, and the negative tabs 1413b and 1414b of two adjacent electric cells in the cell group 1402 are combined to form a single pole tab 1404. In this embodiment, the insulation plate 1420 has plate tab matching holes 1421a, 1421b, 1422a and 1422b, the transfer conductor 1430a has transfer conductor tab assembly holes 1431a and 1432a, and the transfer conductor 1430b has transfer conductor tab assembly holes 1431b and 1432b. The single pole tab 1401 passes through the plate tab matching hole 1421a and the transfer conductor tab assembly hole 1431a in turn. The single pole tab 1402 passes through the plate tab matching hole 1421b and the transfer conductor tab assembly hole 1431b in turn. The single pole tab 1403 passes through the plate tab matching hole 1422a and the transfer conductor tab assembly hole 1432a in turn. The single pole tab 1404 passes through the plate tab matching hole 1422b and the transfer conductor tab assembly hole 1432b in turn.

According to the embodiments shown in Fig. 14A and Fig. 14B, by combining the tabs with the same polarity, the number of the transfer conductor tab assembly part and the plate tab matching part can be reduced, the assembly process is further simplified, and the production efficiency of the secondary battery is improved.

In the secondary battery assembly of the application, the electric cell assembly, the transfer conductor and the insulation plate can be matched with each other to assemble a variety of secondary battery assemblies with different structures. Several different embodiments of the secondary battery assembly of the present application are shown below.

### Embodiment 1 of secondary battery assembly

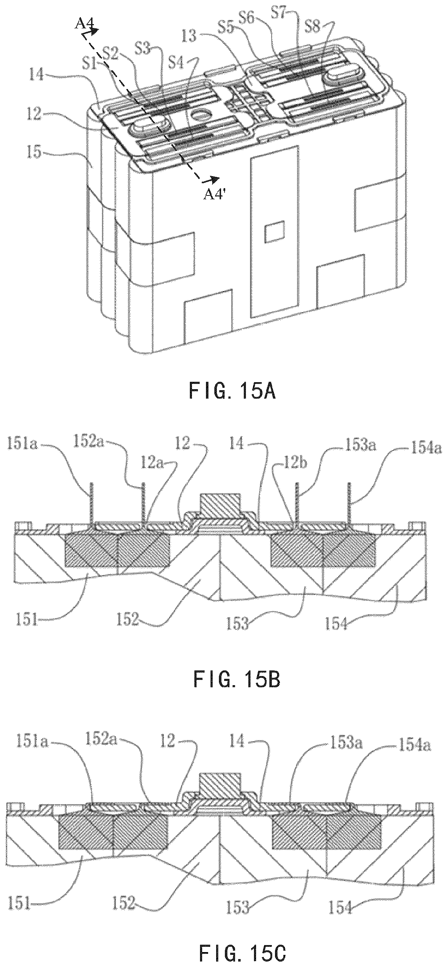

In some optional embodiments, as shown in Figs. 15A to 15D, the embodiments of the application provide a secondary battery assembly. The secondary battery assembly uses a four-cell battery assembly. The battery assembly of the secondary battery assembly comprises a first cell 151, a second cell 152, a third cell 153, and a fourth cell 154 arranged side by side. Two sides of the top of the first electric cell 151 are respectively provided with a first positive tab 151a and a first negative tab 151b. Two sides of the top of the second electric cell 152 are respectively provided with a second positive tab 152a and a second negative tab 152b. Two sides of the top of the third electric cell 153 are respectively provided with the third positive tab 153a and the third negative tab 153b. Two sides of the top of the fourth electric cell 154 are respectively provided with the fourth positive tab 154a and the fourth negative tab 154b. Wherein, the first electric cell 151 and the fourth electric cell 154 are the outer electric cells, the second electric cell 152 and the third electric cell 153 are the inner electric cells, accordingly, the tabs 151a, 151b, 154a and 154b belong to the second tabs, and the tabs 152a, 152b, 153a and 153b belong to the first tabs.

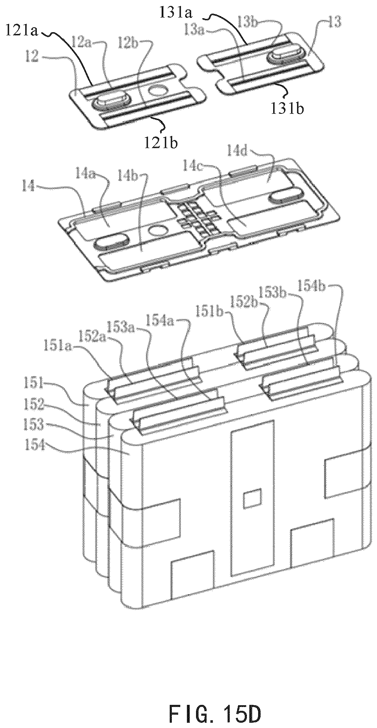

As shown in Fig. 15D, the positive transfer sheet 12 is provided with a first positive assembly hole 12a allowing the second positive tab 152a to pass through and a second positive assembly hole 12b allowing the third positive tab 153a to pass through. The negative transfer sheet 13 is provided with a second negative assembly hole 13b allowing the second negative tab 152b to pass through and a first negative assembly hole 13a allowing the third negative tab 153b to pass through.

In the embodiment shown in Fig. 15D, the positive transfer sheet 12 also comprises side assembly parts 121a and 121b located on the side of the transfer conductor, which are used for allowing the first positive tab 151a and the fourth positive tab 154a to pass through and get the side parts wrapped respectively. Similarly, the negative electrode sheet 13 also comprises side assembly parts 131a and 131b located on the side of the transfer conductor, which are respectively used for allowing the first negative tab 151b and the fourth negative tab 154b to pass through and get the side parts wrapped. In this embodiment, the side assembly parts 121a, 121b, 131a, 131b are actually the side portions of the transfer conductor, which do not need to be formed additionally to save materials and reduce processing costs.

As shown in Fig. 15D, the insulation plate 14 is located between the electric cell assembly and the positive transfer sheet 12 and the negative transfer sheet 13 of the transfer conductor. The insulation plate 14 is provided with a plate tab matching part for allowing the tab to pass through. In this embodiment, the plate tab matching part is a plate tab matching hole. The insulation plate 14 is provided with a first tab through hole 14a through the first positive tab 151a and the second positive tab 152a, a second tab through hole 14b through the third positive tab 153a and the fourth positive tab 154a, a third tab through hole 14c through the third negative tab 153b and the fourth negative tab 154b, and a fourth tab through hole 14d through the first negative tab 151b and the second negative tab 152b. The insulation plate 14 is arranged above the electric cell 15 and below the positive transfer sheet 12 and the negative transfer sheet 13. The positive transfer sheet 12 and the negative transfer sheet 13 are separated from the electric cell 15 through the insulation plate 14.

In some embodiments, the first tab passes through the plate tab matching part and the transfer conductor tab assembly hole, and then is bent. The bent first tab is welded with the top surface of the transfer conductor. The second tab is bent after passing through the plate tab matching part and the side assembly part in turn. The bent second tab is wrapped from the side of the transfer conductor to the upper part of the transfer conductor and welded with the top surface of the transfer conductor.

It should be noted that in the secondary battery assembly shown in Fig. 15A, the tab has been bent and welded on the top surface of the transfer conductor. Fig. 15B shows a sectional view along line A4A4' of the secondary battery assembly shown in Fig. 15A when the tab is not bent. In combination with Figs. 15A to 15D, the first positive tab 151a passes through the first tab through hole 14a and is wrapped from the side assembly part 121a of the positive transfer sheet 12 to the upper part of the positive transfer sheet 12, and after bending the first positive tab 151a, it is welded with the top surface of the positive transfer sheet 12 to form the first welding part S 1. The second positive tab 152a passes through the first tab through hole 14a and the first positive assembly hole 12a in turn from bottom to top, and after the second positive tab 152a is bent, it is welded with the top surface of the positive transfer sheet 12 to form the second welding part S2. After the third positive tab 153a passes through the second tab through hole 14b and the second positive assembly hole 12b in turn from bottom to top, and after the third positive tab 153a is bent, it is welded with the top surface of the positive transfer sheet 12 to form the third welding part S3. The fourth positive tab 154a passes through the second tab through hole 14b and winds from the side assembly part 121b of the positive transfer sheet 12 to the upper part of the positive transfer sheet 12. After bending, the fourth positive tab 154a is welded with the top surface of the positive transfer sheet 12 to form the fourth welding part S4.

The first negative tab 151b passes through the fourth tab through hole 14d, and then winds from the side assembly part 131a of the negative transfer sheet 13 to the upper part of the negative transfer sheet 13. After bending, the first negative tab 151b is welded with the top surface of the negative transfer sheet 13 to form the fifth welding part S5. After the second negative tab 152b passes through the fourth tab through hole 14d and the second negative assembly hole 13b from bottom to top, the second negative tab 152b is bent and welded with the top surface of the negative transfer sheet 13 to form the sixth welding part S6. After the third negative tab 153b passes through the third tab through hole 14c and the first negative assembly hole 13a from bottom to top, the third negative tab 153b is bent and welded with the top surface of the negative transfer sheet 13 to form the seventh welding part S7. The fourth negative tab 154b passes through the third tab through hole 14c and winds from the side assembly part 131b of the negative transfer sheet 13 to the upper part of the negative transfer sheet 13. After bending, the fourth negative tab 154b is welded with the top surface of the negative transfer sheet 13 to form the eighth welding part S8.

In some embodiments, the transfer conductor tab assembly hole has a hole wall, and the first tab passes through the plate tab matching part and the transfer conductor tab assembly hole in turn, and then is welded with the hole wall of the transfer conductor. The side assembly part is provided with a side wall, and the second tab passes through the plate tab matching part and the side assembly part in turn, and then is welded with the side wall.

For example, after the positive tab and negative tab of the second electric cell 152 and the third electric cell 153 pass the tab through hole and the tab assembly hole in turn, they can be directly welded with the hole wall of the tab assembly hole of the positive transfer sheet 12 and the negative transfer sheet 13 respectively. The positive tab and negative tab of the first electric cell 151 and the fourth electric cell 154 can be directly welded with the side walls of the positive transfer sheet 12 and the negative transfer sheet 13 respectively after passing through the tab through hole.

### Embodiment 2 of secondary battery assembly

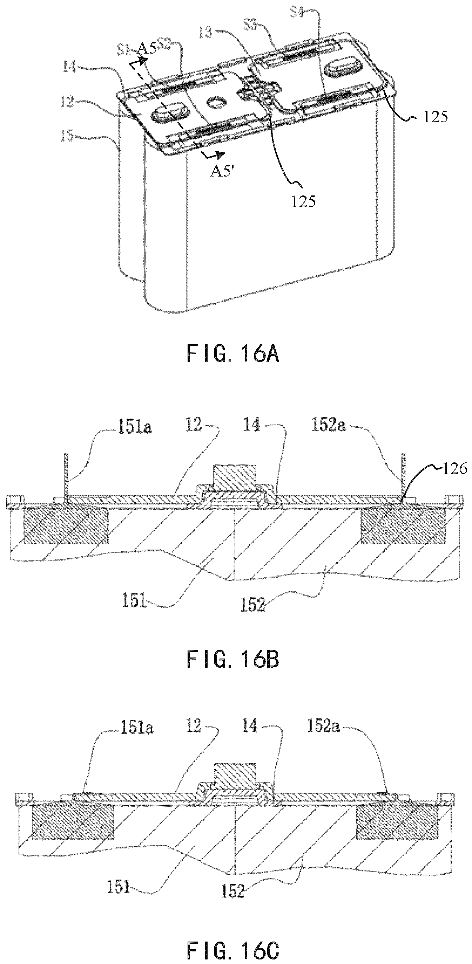

In some optional embodiments, as shown in Figs. 16A to 16D, the embodiments of the application provide a secondary battery assembly. The secondary battery assembly uses a two-cell battery assembly. The electric cell assembly of the secondary battery assembly comprises a first cell 151 and a second cell 152 arranged side by side. Two sides of the top of the first electric cell 151 are respectively provided with a first positive tab 151a and a first negative tab 151b. Two sides of the top of the second electric cell 152 are respectively provided with a second positive tab 152a and a second negative tab 152b. The transfer conductor comprises a positive transfer plate 12 and a negative transfer plate 13. The positive transfer plate 12 is an aluminum plate and the negative transfer plate 13 is a copper plate.

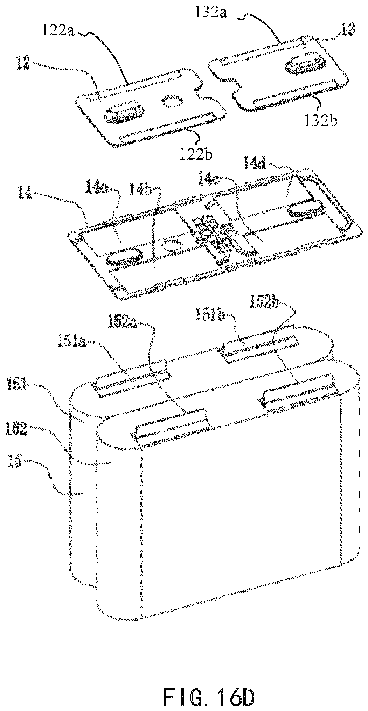

The transfer conductor in this embodiment only comprises side assembly part 122a, 122b, 132a, and 132b, as shown in Fig. 16D. According to the embodiment, the material cost and processing cost can be reduced, and no additional holes are required on the positive transfer sheet 12 and the negative transfer sheet 13. The positive transfer sheet 12 is arranged between the first positive tab 151a and the second positive tab 152a, and the negative transfer sheet 13 is arranged between the first negative tab 151b and the second negative tab 152b. In some embodiments, the top surface of the transfer conductor is provided with a sinking platform, which has a sinking platform depth relative to the top surface. The transfer conductor tab assembly part is located in the sinking platform, and the sinking platform is used to accommodate the bent tab. As shown in Fig. 5D, the side assembly parts 122a, 122b, 132a and 132b are respectively located in the sinking platform.

In combination with Figs. 16A to 16D, the first positive tab 151a passes through the first tab through hole 14a and winds from the side assembly part 122a of the positive transfer sheet 12 to the upper part of the positive transfer sheet 12. After bending the first positive tab 151a, it is welded with the top surface of the positive transfer sheet 12 to form the first welding part S 1. The second positive tab 152a passes through the second tab through hole 14b and winds from the side assembly part 122b of the positive pole transfer sheet 12 to the upper part of the positive pole transfer sheet 12. After bending, the second positive tab 152a is welded with the top surface of the positive pole transfer sheet 12 to form the second welding part S2. The first negative tab 151b passes through the fourth tab through hole 14d, and then winds from the side assembly part 132a of the negative transfer sheet 13 to the upper part of the negative transfer sheet 13. After bending, the first negative tab 151b is welded with the top surface of the negative transfer sheet 12 to form the third welding part S3. The second negative tab 152b passes through the third tab through hole 14c and winds from the side assembly part 132b of the negative transfer sheet 13 to the upper part of the negative transfer sheet 13. After bending, the second negative tab 152b is welded with the top surface of the negative transfer sheet 13 to form the fourth welding part S4.

In some embodiments, chamfers or fillets are arranged around the opening of the transfer conductor tab assembly part, a positioning slot matching the contour of the transfer conductor is arranged on the top of the insulation plate, and the transfer conductor is located in the positioning slot. Referring to Figs. 16A and 16B, the positioning slot 125 and the fillet 126 are marked. Wherein, the positioning slot 125 is a positioning reinforcing structure 910 similar to that shown in Fig. 9A. Because it protrudes from the top of the insulation plate 14, it can limit the transfer conductor therein, so it plays a positioning role. Chamfers or fillets 126 are good for supporting the tab and will not tear the tab due to burrs and sharp corners. The top of the insulation plate 14 is respectively provided with a positioning slot 125 that matches the contour of the positive transfer sheet 12 and the negative transfer sheet 13. The positive transfer sheet 12 and the negative transfer sheet 13 are respectively located in the positioning slot 125, providing installation and fixing positions for the positive transfer sheet 12 and the negative transfer sheet 13.

### Embodiment 3 of secondary battery assembly

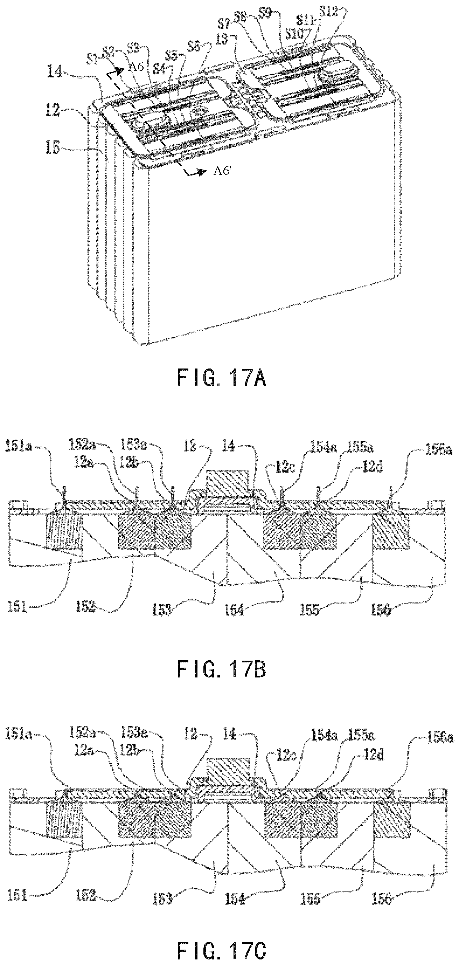

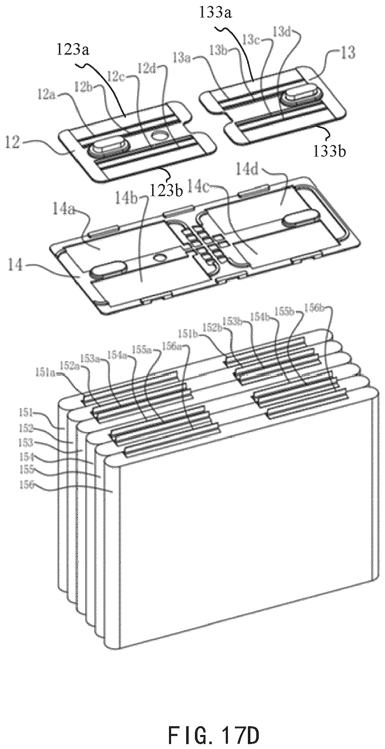

In some optional embodiments, as shown in Fig. 17A to Fig. 17D, the embodiment of the application provides a secondary battery assembly. The secondary battery assembly uses a six-cell battery assembly. Compared with the four-cell battery assembly, the six-cell battery assembly adds a fifth cell 155 and a sixth cell 156. Two sides of the top of the fifth cell 155 are respectively provided with the fifth positive tab 155a and the fifth negative tab 155b. Two sides of the top of the sixth cell 156 are respectively provided with the sixth positive tab 156a and the sixth negative tab 156b. The positive transfer sheet 12 used in the corresponding six cell battery assembly adds the third positive assembly hole 12c and the fourth positive assembly hole 12d, and the negative transfer sheet 13 used in the six-cell battery assembly adds the third negative assembly hole 13c and the fourth negative assembly hole 13d. As shown in Fig. 17D, the positive transfer sheet 12 is provided with side assembly parts 123a and 123b, and the negative transfer sheet 13 is provided with side assembly parts 133a and 133b. In this embodiment, the transfer conductor tab assembly hole and the side assembly part are respectively located in the sinking platform.

The installation methods of the first to the sixth positive tab, the first to the sixth negative tab, the positive transfer sheet 12 and the negative transfer sheet 13 of the six-cell battery assembly are the same as those of the first to the fourth positive tab, the first to the fourth negative tab, the positive transfer sheet 12 and the negative transfer sheet 13 of the four-cell battery assembly. The specific installation and connection methods will not be repeated. As shown in Fig. 17A, the first to sixth positive tabs of the six cell battery assembly are welded with the positive transfer sheet 12 to form the first welding part S1, the second welding part S2, the third welding part S3, the fourth welding part S4, the fifth welding part S5 and the sixth welding part S6 in turn. The first to sixth negative tabs are welded with the negative electrode sheet 13 to form the seventh welding part S7, the eighth welding part S8, the ninth welding part S9, the tenth welding part S 10, the eleventh welding part S11 and the twelfth welding part S 12 in turn.

### Embodiment 4 of secondary battery assembly

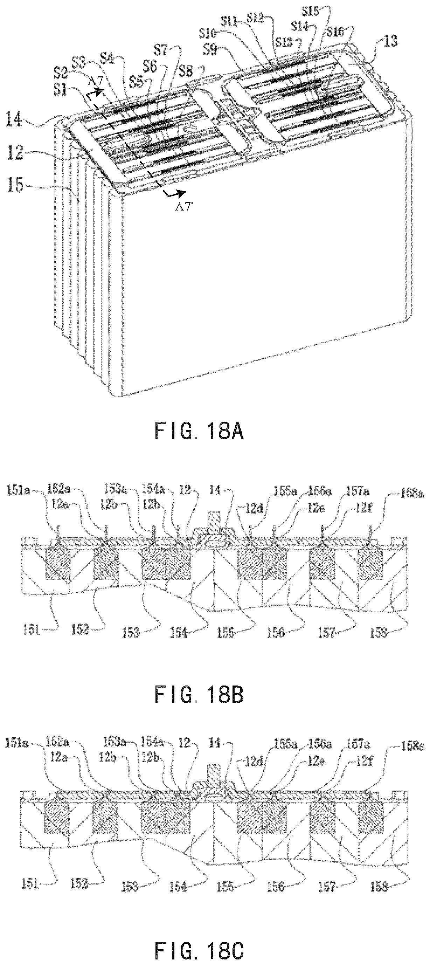

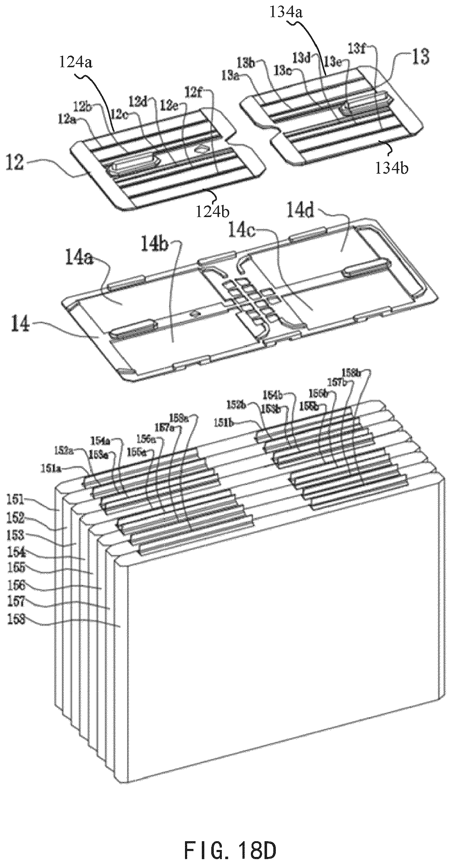

In some optional embodiments, as shown in Figs. 18A to 18D, the embodiment of the application provides a secondary battery assembly. The secondary battery assembly uses an eight-cell battery assembly. Compared with the six-cell battery assembly, the eight-cell battery assembly adds a seventh cell 157 and an eighth cell 158. Two sides of the top of the seventh cell 157 are respectively provided with the seventh positive tab 157a and the seventh negative tab 157b. Two sides of the top of the eighth cell 158 are respectively provided with the eighth positive tab 158a and the eighth negative tab 158b. The positive transfer sheet 12 used in the corresponding eight cell battery assembly adds the fifth positive assembly hole 12e and the sixth positive assembly hole 12f, and the negative transfer sheet 13 used in the eight cell battery assembly adds the fifth negative assembly hole 13e and the sixth negative assembly hole 13f. As shown in Fig. 18D, the positive transfer sheet 12 has side assembly parts 124a and 124b, and the negative transfer sheet 13 has side assembly parts 134a and 134b. In this embodiment, the transfer conductor tab assembly hole and the side assembly part are respectively located in the sinking platform.

The installation methods of the first to the eighth positive tab, the first to the eighth negative tab, the positive transfer sheet 12 and the negative transfer sheet 13 of the eight-cell battery assembly are the same as those of the first to the sixth positive tab, the first to the sixth negative tab, the positive transfer sheet 12 and the negative transfer sheet 13 of the six cell battery assembly. The specific installation and connection methods will not be repeated. The first to eighth positive tabs of the eight cell battery assembly in the embodiment of the application are welded with the positive transfer sheet 12, and the first welding part S1, the second welding part S2, the third welding part S3, the fourth welding part S4, the fifth welding part S5, the sixth welding part S6, the seventh welding part S7 and the eighth welding part S8 are formed in turn. The first to eighth negative tabs are welded with the negative electrode sheet 13, and sequentially form the ninth welding part S9, the tenth welding part S10, the eleventh welding part S11, the twelfth welding part S12, the thirteenth welding part S13, the fourteenth welding part S14, the fifteenth welding part S15 and the sixteenth welding part S16.

### Embodiment 5 of secondary battery assembly

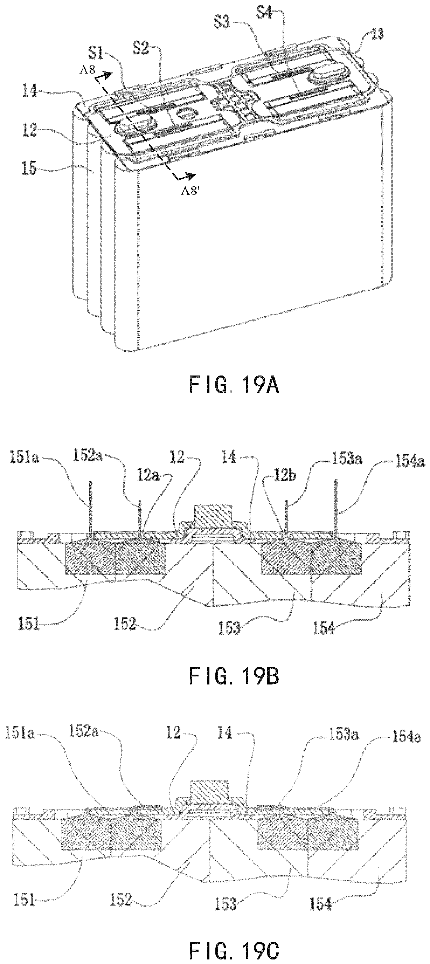

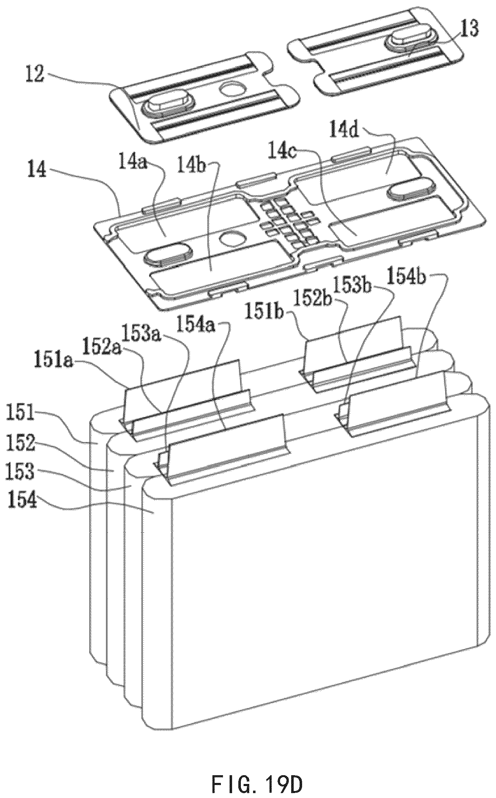

In some optional embodiments, as shown in Figs. 19A to 19D, the embodiment of the application provides a secondary battery assembly, which uses four-cell battery assembly with different tab heights. In the four-cell battery modules with different tab heights in the embodiment of the application, the first positive tab 151a, the first negative tab 151b, the fourth positive tab 154a and the fourth negative tab 154b of the first cell 151 and the fourth cell 154 on the outer side have the same height. The height of the second positive tab 152a, the second negative tab 152b, the third positive tab 153a and the third negative tab 153b of the second cell 152 and the third cell 153 at the inner side are the same. The height of the first positive tab 151a, the first negative tab 151b, the fourth positive tab 154a and the fourth negative tab 154b on the outer side are higher than the height of the second positive tab 152a, the second negative tab 152b, the third positive tab 153a and the third negative tab 153b on the inner side.

In combination with Fig. 19B and Fig. 19C, after the second positive tab 152a and the third positive tab 153a pass through the side assembly part of the positive transfer sheet 12 and the transfer conductor tab assembly hole respectively, the second positive tab 152a and the third positive tab 153a are bent towards the central axis direction of the positive transfer sheet 12, and are welded with the top surface of the positive transfer sheet 12. After the second negative tab 152b and the third positive tab 153a pass through the side assembly part of the negative electrode sheet 13 and the transfer conductor tab assembly hole respectively, the second negative tab 152b and the third positive tab 153a are bent towards the central axis direction of the negative electrode sheet 13, and are welded with the top surface of the negative electrode sheet 13.

In combination with Fig. 19A, the first positive tab 151a and the fourth positive tab 154a pass through the side assembly part of the positive transfer sheet 12 and are bent in the direction of the second positive tab 152a and the third positive tab 153a, and the first positive tab 151a is welded with the second positive tab 152a to form the first welding part S1, and the fourth positive tab 154a is welded with the third positive tab 153a to form the second welding part S2. The first negative tab 151b and the fourth negative tab 154b pass through the side assembly part of the negative electrode sheet 13, and both bend in the direction of the second negative tab 152b and the third positive tab 153a. The first negative tab 151b is welded with the second negative tab 152b to form a third welding part S3, and the fourth negative tab 154b is welded with the third negative tab 153b to form a fourth welding part S4.

With reference to Figs. 19A to 19D, in the electric cell assembly including three or more electric cells, the height of the second tab of the outer electric cell is greater than the height of the first tab of the inner electric cell, and the height of the tab from the outer electric cell to the inner electric cell can be reduced in turn. For the embodiment including an odd number of electric cells, one electric cell in the middle has the lowest tab height, and the rest tabs' heights are also reduced in order from the outer electric cell to the inner electric cell. For the embodiment including an even number of electric cells, the two electric cells in the middle have the lowest tab height, and the rest tabs' heights are also reduced in order from the outer electric cell to the inner electric cell.

Embodiments 1 to 5 of the aforementioned secondary battery assembly and the accompanying drawings are used to describe the embodiments of several secondary battery assemblies, in which the corresponding transfer conductors and insulation plates of different electric cell assemblies may also be different.

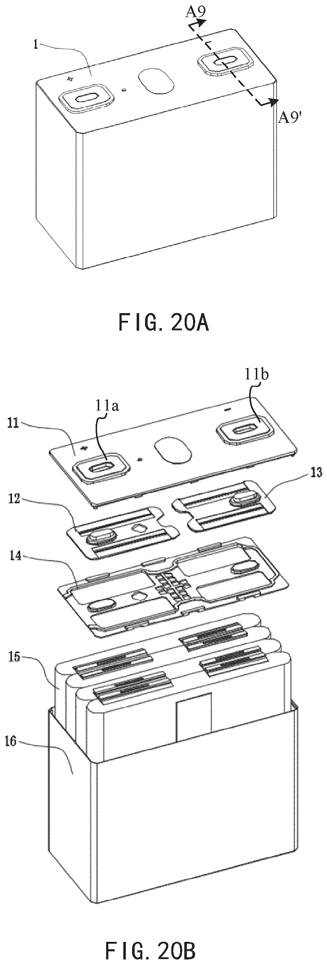

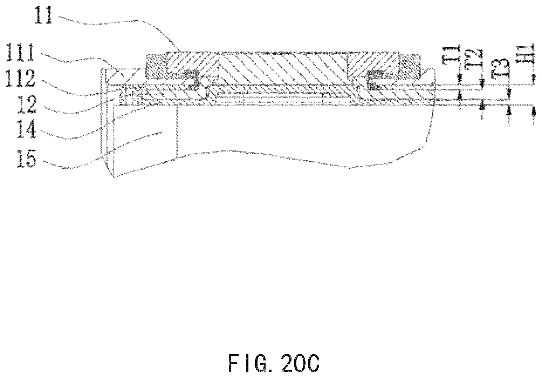

Figs. 20A to 20C show a secondary battery provided in the second aspect of the embodiment of the present application, in which the electric cell assembly, insulation plate 14 and transfer conductor are the same as those in the embodiment shown in Fig. 1, so the same labels are applied. Wherein, Fig. 20A is an overall schematic diagram of the secondary battery 1, Fig. 20B is an exploded view of the secondary battery 1, and Fig. 20C is a sectional view of Fig. 20A along line A9A9'. In combination with Figs. 20A to 20C, the secondary battery 1 comprises: a shell 16, which is a hollow structure enclosed around the top opening, in which the secondary battery assembly described in any of the above embodiments is installed, a top cover 11 is arranged at the top of the shell 16 to enclose the secondary battery assembly in the shell 16, and there are poles 11a, 11b on the top cover 11 which are connected with the transfer conductor, pole 11a and 11b lead the current of the secondary battery assembly out of the shell 16. One of the poles 11a and 11b is a positive pole, and the other is a negative pole. Its polarity corresponds to the polarity of the lower transfer conductor. As shown in Fig. 20C, the top cover 11 comprises the top cover plate 111 and the lower insulating part 112 at the bottom of the top cover plate 111. After the transfer conductor of the secondary battery assembly installed in the shell 16 is connected with the pole on the top cover 11, the assembly of the secondary battery 1 is completed. The tab of the secondary battery 1 of the assembly structure is completely fixed in the space formed by the transfer conductor and the lower insulating member 112. At the same time, the height from the top cover plate 111 to the cell H1=T1 (the thickness of the lower insulating part 112)+T2 (the thickness of the transfer conductor 12)+T3 (the thickness of the insulation plate 14), which increases the height of the electric cell and greatly improves the volume energy density of the secondary battery.

In the process of assembling and welding the above assembly structure, the transfer conductor needs to be welded with the tab of the electric cell. In some cases, the tab of the transfer conductor and the electric cell is vertically welded, and the welding strength can be guaranteed only by applying force in the height direction. Therefore, external force is required to press the transfer conductor and the insulation plate, which reduces the production and assembly efficiency and increases the production cost.

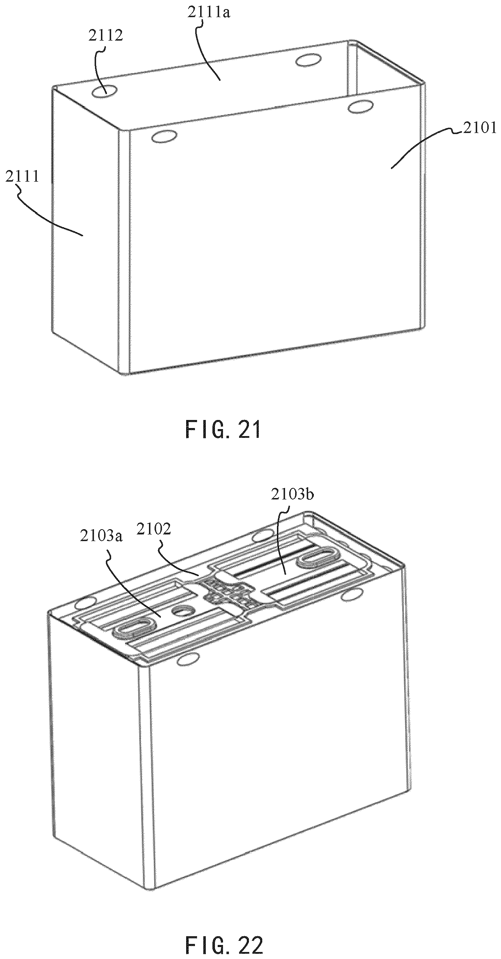

In some embodiments, the inner wall of the shell of the secondary battery in the application is provided with a limited structure to limit the insulation plate in the shell. Figs. 21 to 23D are used to illustrate these embodiments. These embodiments can solve the problem that in the related technology, during the secondary battery assembly and welding process, it is necessary to press the transfer sheet and insulation plate with external force, which reduces the production assembly efficiency and increases the production cost.

As shown in Fig. 21, the first aspect of the embodiment of the application provides a shell which is self matched with an insulation plate. The shell 2101 comprises a battery shell 2111, which is a rectangular cylinder structure with a top opening enclosed around it. On the inner wall 2111a of the battery shell 2111, there provides a limited structure 2112 which limits the insulation plate 2102 in the battery shell 2111, The limiting structure 2112 can firmly fix the insulation plate 2102 in the battery shell 2111, so as to facilitate the welding connection between the tab and the transfer conductors 2103a and 2103b on the top of the insulation plate 2102.

In some optional embodiments, referring to Fig. 21, the limited structure 2112 is a plurality of convex plates fixed on the inner wall 2111a of the battery shell 2111, and the plurality of convex plates are located on two parallel inner walls 2111a of the battery shell 11. The inner wall 2111a is the side wall inside the battery shell 2111. The inner part of the battery shell 2111 comprises four side walls. The limited structure 2112 can be located on any side wall.

The plurality of convex plates and the battery shell 2111 are of an integral forming structure of aluminum alloy materials, and the plurality of convex plates are close to the top opening of the battery shell 2111. A plurality of convex plates are respectively arranged on the inner wall of the battery shell 2111, and are surrounding the insulation plate 2102. After the insulation plate 2102 is installed in the battery shell 2111, the plurality of convex plates are jointly clamped around the insulation plate 2102 to prevent the insulation plate 2102 from falling out of the battery shell 2111. The clamping here refers to that the insulation plate 2102 is located above or in the middle of the convex plate, and the convex plate fixes the insulation plate 2102 to prevent the insulation plate 2102 from moving up and down.

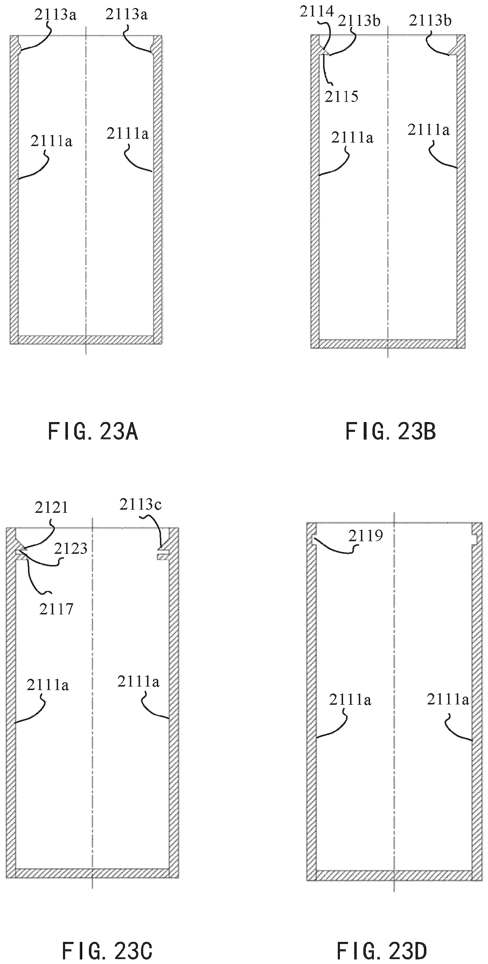

Figs. 23A to 23D are side sectional views of the shell, showing four different embodiments of the limited structure.

In some optional embodiments, as shown in Fig. 23A, the limited structure 2112 is a convex plate 2113a, the convex plate 2113a is a spherical crown projecting toward the inside of the battery shell 2111, and multiple convex plates 2113a are at the same height on the inner wall 2111a of the battery shell 2111. The convex plate 2113a of the embodiment of the application is designed as a spherical crown structure protruding to the inside of the battery shell 2111. The convex plate 2113a of the spherical crown structure is convenient for processing. The convex plate 2113a of the spherical crown shape can be obtained by pressing from the outside of the battery shell 2111 to the inside of the battery shell 2111 with a stamping mould tool, which is beneficial for reducing the production cost. The convex plate 2113a of the spherical crown shape is convenient for pressing the insulation plate 2102 into the battery shell 2111, reducing the difficulty of installation.

In some optional embodiments, as shown in Fig. 23B, the limited structure 2112 is a convex plate 2113b, and the convex plate 2113b is a triangular limit block projecting toward the inside of the battery shell 11. Taking one convex plate 2113b as an example, the top of the triangular limit block is provided with a downward inclined guide surface 2114, and the bottom of the triangular limit block is provided with a limit surface 2115 that contacts against the insulation plate 2102.

The convex plate 2113b of the embodiment of the application is designed as a triangular limit block protruding to the inside of the battery shell 2111. The guide surface 2114 on the top of the triangular limit block is convenient for pressing the insulation plate 2102 into the battery shell 2111. The limit surface 2115 on the bottom of the triangular limit block is used to limit the insulation plate 2102 into the battery shell 2111 to prevent the insulation plate 2102 from falling out of the battery shell 2111, Clamping reliability of the insulation plate 2102 and the battery shell 2111 is improved.

In some optional embodiments, as shown in Fig. 23C, the limited structure 2112 is the convex plate 2113c, which comprises upper limit block 2121 and lower limit block 2117. The upper limit block 2121 is located on the top of the lower limit block 2117 and is set at intervals with each other. A positioning space 2123 for clamping the insulation plate 2102 is formed between the upper limit block 2121 and the lower limit block 2117. In this embodiment, the upper limit block 2121 and the lower limit block 2117 are used to position the insulation plate 2102 in the height direction, so as to ensure that the height position of the insulation plate 2102 remains constant, and reduce the risk of short circuit caused by the contact between the excessive sinking tab and the electrode piece because of excessive pressing of the insulation plate 2102.

In some optional embodiments, as shown in Fig. 23D, the limited structure 2112 of the battery shell 2101 of the secondary battery is a groove 2119 arranged on the inner wall 2111a of the battery shell 2111, which is clamped with the edge of the plate 2 to clamp the plate 2 in the battery shell 2111. The groove 2119 is located on two parallel inner walls 2111a of the battery shell 2111, and the groove 2119 extends along the length direction of the insulation plate 2102. The left and right sides of the insulation plate 2102 are located in the grooves 2119 on the two parallel side walls of the battery shell 2111. The grooves 2119 can ensure that the height and position of the insulation plate 2102 remain constant, and reduce the risk of short circuit caused by the contact between the excessive sinking tab and the electrode piece because of excessive pressing of the insulation plate 2102.

Of course, in other embodiments, a plurality of grooves 2119 can be provided, and the plurality of grooves 2119 are spaced along the length direction of the insulation plate 2102. The edge of the insulation plate 2102 is provided with a plurality of bumps adapted to the groove 2119. The bumps of the insulation plate 2102 are respectively located in the plurality of grooves 2119, so that the insulation plate 2102 located in the battery shell 2111 can move up and down.

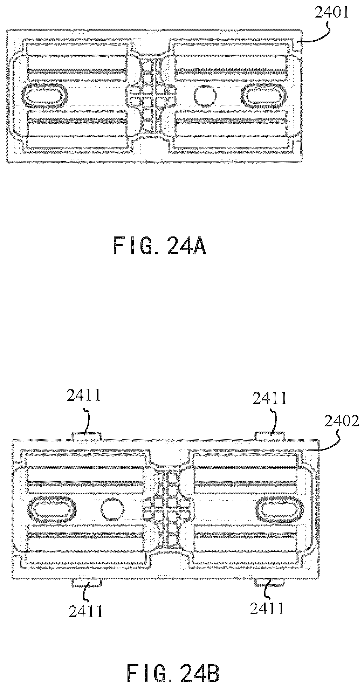

Fig. 24A and Fig. 24B are the top view of a secondary battery assembly, in which the insulation plate 2401 shown in Fig. 24A can be clamped with the limited structure. The insulation plate 2402 shown in Fig. 24B adds a bump 2411 matching with the groove 2119 on the basis of the insulation plate 2401.

As shown in Figs. 21 and 22, the inner wall 2111a of the battery shell 2111 of the present application is provided with a limited structure 2112 that limits the insulation plate 2102 in the battery shell 2111. The limited structure 2112 can limit the insulation plate 2102 in the battery shell 2111, which can achieve the following beneficial effects.
(1) The self-locking of the insulation plate 2102 and the battery shell 2111 is realized. When the transfer conductor is welded with the tab, no external force is needed to press the transfer sheet, which reduces the processing difficulty and improves the production efficiency.
(2) It reduces the distance between the electric cell and the insulation plate 2102 in the height direction, and improves the energy density of the secondary battery.
(3) It can increase the connection strength between the transfer conductor and the electric cell, improve the anti vibration ability of the electric cell, and increase the connection reliability of the tab and the transfer conductor.

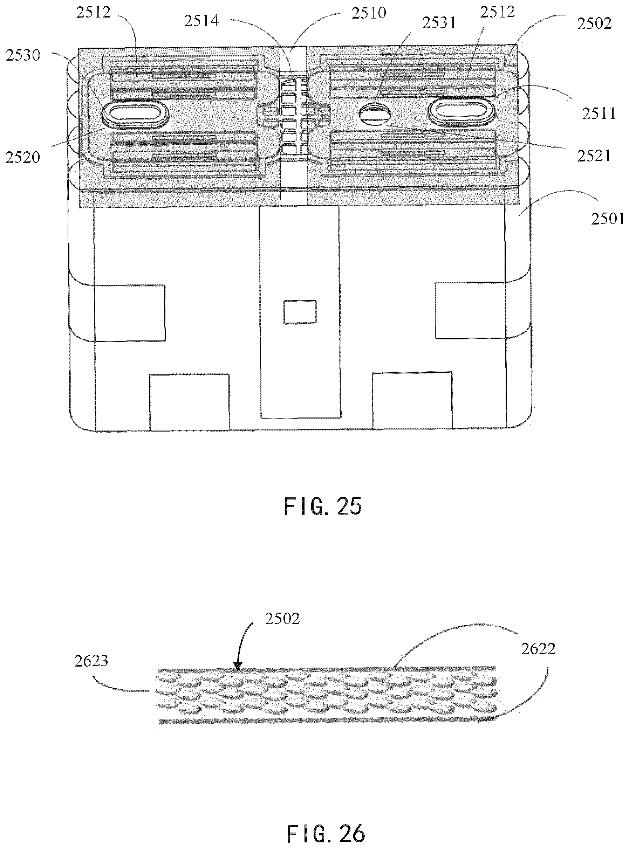

In view of the problem that the safety performance of the secondary battery adhesive tape in the use process of the secondary battery in the related technology needs to be improved, this application also proposes a secondary battery assembly as shown in Fig. 25 on the basis of the secondary battery described above, which comprises: electric cell assembly 2501 (also known as the winding cell), and its top is provided with a plurality of tabs. Two transfer conductors 2511 (also referred to as transfer sheet) are arranged on the top of the electric cell assembly 2501, and the tabs are respectively welded on the surfaces of the two transfer conductors 2511 to form a welding area 2512. At least one double-sided protective adhesive layer 2502, both sides of which are bonding surfaces, is attached to the upper part of the transfer conductor 2511 and covers at least the welding area 2512.

As shown in Fig. 26, the double-sided protective adhesive layer 2502 comprises two layers of adhesive layer 2622 and carbonate protective layer 2623 arranged between the two layers of adhesive layer 2622. In this way, when the secondary battery is out of control due to unexpected heat, the carbonate protective layer 2623 can release gases that inhibit combustion, thereby improving the safety performance of the secondary battery.

According to these embodiments, since the transfer conductor 2511 is provided with a double-sided protective adhesive layer 2502 with both sides of the adhesive layer 2622, the double-sided protective adhesive layer 2502 is used to paste and cover the welding area 2512, thus effectively preventing the welding slag that may fall from the welding area 2512 from falling out of the welding area 2512 to the inside of the electric cell assembly 2501. At the same time, since the other side of the adhesive layer 2622 is also provided, the double-sided protective adhesive layer 2502 can also adhere to foreign matters such as welding slag or dust particles that fall on it, effectively reducing the possibility of foreign matters entering the electric cell assembly 2501. The double-sided protective adhesive layer 2502 covering the welding area 2512 can also effectively prevent the welding area 2512 from contacting with the electrolyte after the secondary battery is injected, reducing its corrosion rate, and finally effectively protecting the secondary battery through the double-sided protective adhesive layer 2502.

Furthermore, the carbonate protective layer 2623 is sodium bicarbonate or sodium carbonate layer structure.

Optionally, the adhesive layer 2622 is a double-sided adhesive layer 2622, and the carbonate protective layer 2623 is a powder layer structure laid and adhered between two layers of adhesive layers 2622.

In this way, the carbonate protective layer 2623 can be quickly and efficiently set in the double-layer protective adhesive layer, reducing the process difficulty and implementing easily.

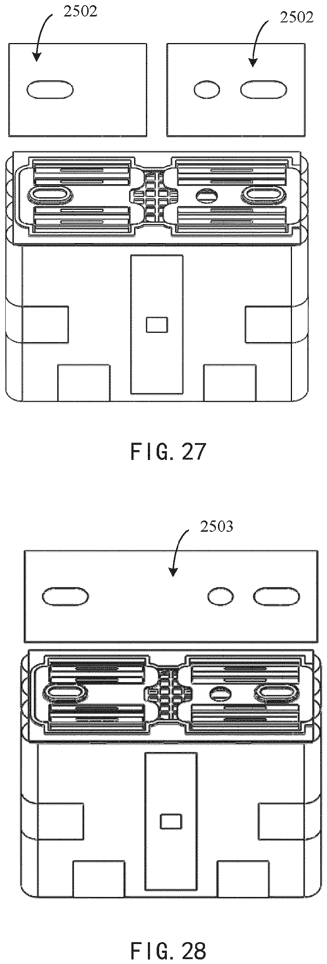

Fig. 27 is an exploded view of the secondary battery assembly of the embodiment shown in Fig. 25. As shown in Fig. 27, the double-sided protective adhesive layer 2502 of the embodiment comprises two mutually separated double-sided protective adhesive layers 2502. Each double-sided protective adhesive layer 2502 is respectively pasted and covering with one or more welding areas 2512 on two transfer conductors 2511. Referring to Fig. 25, in this embodiment, two double-sided protective adhesive layers 2502 are specifically set to respectively cover the welding area 2512 on each transfer conductor 2511.

In some embodiments, the double-sided protective adhesive layer is a whole sheet structure, and the welding area 2512 on the two transfer sheets 2511 is attached at the same time, as the double-sided protective adhesive layer 2503 shown in Fig. 28. In this way, a piece of double-sided protective adhesive 2503 can cover multiple welding areas 2512 at the same time, which makes the operation faster, and makes the double-sided protective adhesive 2503 cover a wider area on the top of the electric cell assembly 2501, and the effect of adhering foreign matters will be more obvious.

Referring to Fig. 25, the transfer conductor 2511 is optionally provided with an transfer convex plate 2530 and a liquid injection hole 2531, and the double-sided protective adhesive layer 2502 is provided with a first hole position 2520 corresponding to the transfer convex plate 2530 and a second hole position 2521 corresponding to the liquid injection hole 2531. The transfer convex plate 2530 is also referred to as the transfer conductor pole.

Further, the shape and size of the first hole position 2520 are consistent with the circumference of the transfer convex plate 2530. The shape and size of the second hole position 2521 are consistent with the circumference of the liquid injection hole 2531.

In this way, the double-sided protective adhesive layer 2502 will not affect the normal use of the secondary battery, and at the same time, the transfer conductor 2511 will be more fully covered, so as to protect the transfer conductor 2511 and avoid falling off of welding slag.

Referring to Fig. 25, in some preferred embodiments, an insulation plate 2510 is arranged between the transfer conductor 2511 and the electric cell assembly 2501 to cover the top surface of the electric cell assembly 2501, and the tab passes through the insulation plate 2510 and the transfer conductor 2511 and is welded to the surface of the transfer conductor 2511, that is, the top surface of the transfer conductor 2511.

The insulation plate 2510 is provided with an air hole 2514 in the area between the two transfer conductors 2511 to improve the heat dissipation capacity of the electric cell assembly 2501. The air hole is also called an explosion-proof valve.

Furthermore, the double-sided protective adhesive layer 2502 completely covers the transfer conductor 2511, and both ends of the double-sided protective adhesive layer 2502 extend beyond the two sides of the insulation plate 2510 and adhere to the side wall of the electric cell assembly 2501. Wherein, the double-sided protective adhesive layer 2502 extending from the circumference of the insulation plate 2510 is attached to the side wall of the electric cell assembly 2501. Specifically, in this embodiment, the double-sided protective adhesive layer 2502 is set in a whole piece and is simultaneously covered on two transfer conductors 2511. Its length in the long side direction of the insulation plate 2510 is consistent with that of the insulation plate 2510, and its length in the width of the insulation plate 2510 is 20mm more than that of the insulation plate 2510, so that the two ends in the length direction are extended to the side wall of the electric cell assembly 2501. This is to further improve the protection effect of double-sided protective adhesive layer 2502 on electric cell assembly 2501, and finally improve the safety performance of secondary battery.

Various assembly structures of the secondary battery of the present application have been described previously. The embodiment of the application also provides an assembly method of the secondary battery described above. Taking the secondary battery 1 shown in Fig. 20A as an example, the assembly method of the secondary battery 1 comprises the following steps.

Step 101: The multilayer of electrode sheets extracted from the electric cell 15 are laminated and ultrasonic pre-welded into the tabs, which comprise the positive tabs and the negative tabs.

Step 102: Multiple electric cells 15 are bundled side by side, and multiple electric cells 15 are combined to form an electric cell assembly.

Step 103. An insulation plate 14 is arranged on the top of the electric cell assembly, and the positive and negative tabs of each electric cell 15 pass through the plate tab matching part of the insulation plate 14.

Step 104. A transfer conductor is arranged on the top of the insulation plate 14. The positive and negative tabs of each electric cell 15 pass through the transfer conductor tab assembly part. The transfer conductor comprises a positive transfer sheet 12 and a negative transfer sheet 13.

Step 105: Bend the positive tab and the negative tab through the transfer conductor tab assembly part, paste and weld the positive tab and the negative tab with the top surfaces of the positive transfer sheet 12 and the negative transfer sheet 13 respectively to form a secondary battery assembly.

Step 106: The top cover 11 connecting the positive transfer sheet 12 and the negative transfer sheet 13 is arranged on the top of the secondary battery assembly. The pole of the top cover 11 is electrically connected with the transfer conductor. The pole comprises the positive pole and the negative pole. The positive pole and the negative pole are respectively connected with the positive transfer sheet 12 and the negative transfer sheet 13.

Step 107: Install the secondary battery assembly into the shell 16 with the top opening, and seal the secondary battery assembly in the shell 16 with the top cover 11.

The secondary battery assembly method in the embodiment of the application greatly reduces the height requirements for the tab and the cost of raw materials. After the tab is shortened, the rolling and stretching effects can be effectively improved (poor stretching in the empty foil area will cause the die cutting tab to produce burrs, which is a safety risk). After the tab is shortened, the volume energy density of the cell is increased, the space utilization rate of the secondary battery is improved, and the short circuit problem caused by pressing the positive tab downward to contact the negative plate when the tab is bent is improved.

## Claims

1. A secondary battery, **characterized in that** the secondary battery comprises a secondary battery assembly, and the secondary battery assembly comprises an electric cell assembly, a transfer conductor and an insulation plate, wherein the electric cell assembly comprises at least two electric cells arranged side by side, and each electric cell has a tab extending from a top surface of the electric cell; the transfer conductor is provided with a transfer conductor tab assembly part; the insulation plate is located between the electric cell assembly and the transfer conductor, and the insulation plate is provided with a plate tab matching part; wherein, folded tabs pass through the plate tab matching part and the transfer conductor tab assembly part in turn, and then are welded with the transfer conductor.

2. The secondary battery of claim 1, **characterized in that**, the transfer conductor tab assembly part comprises a transfer conductor tab assembly hole, the transfer conductor tab assembly hole is a through hole located in an interior of the transfer conductor, and part or all of the folded tabs pass through the plate tab matching part and the transfer conductor tab assembly hole in turn, and then are welded with the transfer conductor.

3. The secondary battery of claim 2, **characterized in that**, the transfer conductor tab assembly hole has a hole wall, and the tabs pass through the plate tab matching part and the transfer conductor tab assembly hole in turn, and then are welded with the hole wall of the transfer conductor; alternatively, the tabs are bent after passing through the plate tab matching part and the transfer conductor tab assembly hole in turn, and the bent tabs are welded with a top surface of the transfer conductor.

4. The secondary battery of claim 2, **characterized in that**, the tab comprises a positive tab and a negative tab, the transfer conductor tab assembly hole comprises a first transfer conductor tab assembly hole and/or a second transfer conductor tab assembly hole, and the positive tab or the negative tab on one of the electric cell assembly passes through the first transfer conductor tab assembly hole; two positive tabs or two negative tabs on two adjacent electric cells in the electric cell assembly pass through the second transfer conductor tab assembly hole.

5. The secondary battery according to any one of claims 1 to 2, **characterized in that**, the transfer conductor tab assembly part comprises a side assembly part, the transfer conductor has a third side and a fourth side extending along a width direction of the secondary battery, and the side assembly part is located on the third side and/or the fourth side of the transfer conductor; part or all of the folded tabs pass through the plate tab matching part and wrap over the side assembly part in turn, and then are welded with the transfer conductor.

6. The secondary battery of claim 5, **characterized in that**, the side assembly part is provided with a side wall, and the tabs pass through the plate tab matching part and the side assembly part in turn and are welded with the side wall; alternatively, the tabs are bent after passing through the plate tab matching part and the side assembly part in turn, and the bent tabs are wrapped from a side of the transfer conductor to an upper of the transfer conductor, and are welded with a top surface of the transfer conductor.

7. The secondary battery of claim 5, **characterized in that**, the transfer conductor tab assembly part further comprises a side recessed part, the side recessed part is located on the third side and/or the fourth side of the transfer conductor, the side recessed part is recessed into an interior of the transfer conductor, and the side recessed part is used to allow corresponding tab to pass through and bend towards the interior of the transfer conductor.

8. The secondary battery of claim 7, **characterized in that**, the secondary battery comprises two transfer conductors, each transfer conductor has a first side and a second side extending along a thickness direction of the secondary battery, wherein the first side of each transfer conductor faces the first side of the other transfer conductor; the side assembly part and a plurality of side recessed parts are sequentially connected to form a stepped structure, the stepped structure is indented to the interior of the transfer conductor from the second side to the first side, or the stepped structure is indented to the interior of the transfer conductor from the first side to the second side.

9. The secondary battery of claim 1, **characterized in that**, the insulation plate has a first plate side and a second plate side extending along a width direction of the secondary battery, the first plate side and the second plate side are arranged oppositely, the plate tab matching part comprises a plate tab matching hole and/or a plate side recessed part, and the plate tab matching hole is a through hole penetrating the insulation plate, the plate side recessed part is located at the first plate side and/or the second plate side, and the plate side recessed part is recessed into an interior of the insulation plate.

10. The secondary battery of claim 9, **characterized in that**, the plate tab matching hole comprises a first plate matching hole and/or a second plate matching hole, each of the first plate matching hole is used to allow one of the tabs passing through, and each of the second plate matching hole is used to allow a plurality of homopolar tabs on adjacent cells to pass through.

11. The secondary battery of claim 1, **characterized in that**, each of the electric cell has a first side and a second side opposite to each other along a thickness direction of the electric cell assembly, the first side of each electric cell is arranged close to an inner side of the electric cell assembly, and the second side of each electric cell is arranged close to an outer side of the electric cell assembly; in the thickness direction of the electric cell assembly, the tabs protrude from a position close to the first side on the top surface of the electric cell.

12. The secondary battery of claim 11, **characterized in that**, the transfer conductor comprises a transfer conductor pole, an upper surface of the transfer conductor is divided into a first transfer conductor area and a second transfer conductor area by a separation line extending along the thickness direction of the electric cell assembly, and the transfer conductor pole is located in the first transfer conductor area; the transfer conductor tab assembly parts corresponding to two innermost electric cells of the electric cell assembly are located in the second transfer conductor area; the transfer conductor tab assembly parts corresponding to two innermost electric cells of the electric cell assembly have a first projection along a width direction of the electric cell assembly, the transfer conductor pole has a second projection along the width direction of the electric cell assembly, and the second projection covers the first projection.

13. The secondary battery of claim 1, **characterized in that**, the electric cell assembly comprises at least one set of electric cell pairs, each set of the electric cell pairs comprises two electric cells adjacent to each other, homopolar tabs of the two electric cells adjacent to each other are combined into a single pole tab, and the single pole tab passes through the plate tab matching part and the transfer conductor tab assembly part in turn, and then is welded with the transfer conductor.

14. The secondary battery of claim 1, **characterized in that**, the cell assembly comprises at least two cell groups, and the cell groups are adjacent along a thickness direction of the secondary battery; each electric cell group comprises at least two electric cells, and the electric cells in each electric cell group are successively adjacent along the thickness direction; the tabs comprise positive tabs and negative tabs, top surfaces of a plurality of electric cells form a plane, the plane is divided into an equal first plane area and a second plane area by a central axis extending along the thickness direction, wherein all the positive tabs are located in the first plane area, and all the negative tabs are located in the second plane area, the projections of all positive tabs in the first plane area of each cell group along the thickness direction do not overlap, and the projections of all negative tabs in the second plane area of each cell group along the thickness direction do not overlap.

15. The secondary battery of claim 14, **characterized in that**, projections of the transfer conductor tab assembly parts and the plate tab matching parts along the thickness direction corresponding to all the positive tabs in the first plane area of each cell group do not overlap; projections of the transfer conductor tab assembly parts and the plate tab matching parts along the thickness direction corresponding to all the negative tabs in the second plane area of each cell group do not overlap.

16. The secondary battery of claim 1, **characterized in that**, the electric cell assembly comprises at least three electric cells arranged side by side, a height of a second tab of an outer electric cell located at an outer side is greater than a height of a first tab of an inner electric cell located at an inner side, and the tab of each electric cell is bent towards the inner electric cell and welded with the first tab of the innermost electric cell.

17. The secondary battery of claim 1, **characterized in that**, the secondary battery further comprises a shell and a top cover, the shell is a hollow structure enclosed around a top opening, the secondary battery assembly is set in the shell, the top cover is used to be set on a top of the shell and seal the secondary battery assembly in the shell, the top cover is provided with a pole connected with the transfer conductor, an inner wall of the shell is provided with a limited structure to limit the insulation plate in the shell.

18. The secondary battery of claim 17, **characterized in that**, the limited structure is a plurality of convex plates or grooves fixed on the inner wall of the shell, the convex plates are located on two parallel inner walls of the shell, the grooves are clamped with an edge of the insulation plate to clamp the insulation plate in the shell, and the grooves are located on two parallel inner walls of the shell.

19. The secondary battery of claim 18, **characterized in that**, the convex plate comprises an upper limit block and a lower limit block, the upper limit block is located on a top of the lower limit block, the upper limit block and the lower limit block are set at intervals with each other, and a positioning space for clamping the insulation plate is formed between the upper limit block and the lower limit block.

20. The secondary battery of claim 18, **characterized in that**, the convex plate and the shell are integrally formed of aluminum alloy materials, and the convex plate is close to the top opening of the shell, and there provides a plurality of grooves spaced along a length direction of the insulation plate, and the edge of the insulation plate is provided with a plurality of bumps adapted to the grooves.

21. The secondary battery of claim 1, **characterized in that**, the secondary battery further comprises at least one double-sided protective adhesive layer, both sides of the double-sided protective adhesive layer are bonding surfaces, each tab is welded on a top surface of the transfer conductor and forms a welding area on the top surface, wherein the double-sided protective adhesive layer is attached to the top surface of the transfer conductor and at least covers the welding area.

22. The secondary battery of claim 21, **characterized in that**, the double-sided protective adhesive layer comprises two adhesive layers and a carbonate protective layer, and the carbonate protective layer is set between the two adhesive layers, and the carbonate protective layer is sodium bicarbonate or sodium carbonate layer structure, and the adhesive layer is a double-sided adhesive layer, and the carbonate protective layer is a powder layer structure laid and adhered between the two adhesive layers.

23. A method for assembling a secondary battery according to any one of claims 1-22, **characterized in that**, the method comprises the following steps:
laminating a multilayer of electrode sheets protruding from the electric cell, and ultrasonically pre-welding the electrode sheets into the tab;
bundling a plurality of the electric cells side by side, and combining the plurality of electric cells into the electric cell assembly;
setting the insulation plate on the top of the electric cell assembly, while the tab of each electric cell passes through the plate tab matching part on the insulation plate;
setting the transfer conductor on the top of the insulation plate, and making the tab of each electric cell further pass through the transfer conductor tab assembly part on the transfer conductor;
bending the tab passing through the transfer conductor tab assembly part, and attaching and welding the bent tab with a top surface of the transfer conductor to form the secondary battery assembly;
setting a top cover on the top of the secondary battery assembly to connect the transfer conductor, while a pole of the top cover is electrically connected with the transfer conductor;
installing the secondary battery assembly into a shell with top opening, and sealing the secondary battery assembly in the shell with the top cover.
